# EUROPEAN PATENT APPLICATION

(11) **EP 4 391 705 A1**
(43) Date of publication of application: **26.06.2024**
(21) Application number: 22858464.5
(22) Date of filing: 16.08.2022
(51) Int. Cl.: H04W 76/19, H04W 16/28

(54) **TERMINAL, WIRELESS COMMUNICATION METHOD, AND BASE STATION**

(30) Priority: 17.08.2021 JP 2021132991
(71) Applicant: NTT DOCOMO, INC., Tokyo 100-6150 (JP)
(72) Inventor: MATSUMURA, Yuki, Tokyo 100-6150 (JP); NAGATA, Satoshi, Tokyo 100-6150 (JP); WANG, Jing, Beijing 100190 (CN); CHEN, Lan, Beijing 100190 (CN)
(74) Representative: Hoffmann Eitle
(86) International application number: PCT/JP2022/030938
(87) International publication number: WO 2023/022146

(57) **Abstract**

A terminal according to an aspect of the present disclosure includes a receiving section that receives a response to a beam failure report in a case where any of a single transmission/reception point (TRP), single downlink control information (DCI)-based multi-TRPs, or multi-DCI-based multi-TRPs are applied, and a control section that performs control assuming a control resource set (CORESET) corresponding to two transmission configuration indication (TCI) states. According to an aspect of the present disclosure, control corresponding to a CORESET corresponding to two TCI states can be implemented.

## Description

### Technical Field

The present disclosure relates to a terminal, a radio communication method, and a base station in a next-generation mobile communication system.

### Background Art

In the universal mobile telecommunications system (UMTS) network, the specifications of long term evolution (LTE) have been drafted for the purpose of further increasing high speed data rates, providing lower delays, and the like (see Non Patent Literature 1). Further, the specifications of LTE-Advanced (third generation partnership project (3GPP) Release (Rel.) 10 to 14) have been drafted for the purpose of further increasing capacity and advancement of LTE (3GPP Rel. 8 and 9), and the like.

Successor systems to LTE (for example, also referred to as 5th generation mobile communication system (5G), 5G+(plus), 6th generation mobile communication system (6G), New Radio (NR), 3GPP Rel. 15 and subsequent releases, and the like) have also been studied.

### Citation List

### Non Patent Literature

Non Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)", April 2010

### Summary of Invention

### Technical Problem

In future radio communication systems (for example, NR), it has been studied to perform a procedure to detect a beam failure and switch to another beam (which may also be referred to as a beam failure recovery (BFR) procedure, BFR, link recovery procedures, and the like).

However, it is not clear about application of a control resource set (CORESET) corresponding to two transmission configuration indication (TCI) states when performing these procedures. If this is not clear, a problem such as a decrease in communication throughput may occur.

Therefore, an object of the present disclosure is to provide a terminal, a radio communication method, and a base station capable of performing control corresponding to a CORESET corresponding to two TCI states.

### Solution to Problem

A terminal according to an aspect of the present disclosure includes a receiving section that receives a response to a beam failure report in a case where any of a single transmission/reception point (TRP), single downlink control information (DCI)-based multi-TRPs, or multi-DCI-based multi-TRPs are applied, and a control section that performs control assuming a control resource set (CORESET) corresponding to two transmission configuration indication (TCI) states.

### Advantageous Effects of Invention

According to an aspect of the present disclosure, control corresponding to a CORESET corresponding to two TCI states can be implemented.

### Brief Description of Drawings

Fig. 1 is a diagram illustrating an example of a beam recovery procedure in Rel. 15 NR.
Fig. 2 is a diagram illustrating an example of a schematic configuration of a radio communication system according to one embodiment.
Fig. 3 is a diagram illustrating an example of a configuration of a base station according to one embodiment.
Fig. 4 is a diagram illustrating an example of a configuration of a user terminal according to one embodiment.
Fig. 5 is a diagram illustrating an example of a hardware configuration of the base station and the user terminal according to one embodiment.

### Description of Embodiments

### (TCI, Spatial Relation, and QCL)

In NR, it has been studied to control reception processing (for example, at least one of reception, demapping, demodulation, and decoding) and transmission processing (for example, at least one of transmission, mapping, precoding, modulation, and coding) in UE of at least one of a signal and a channel (expressed as a signal/channel) based on a transmission configuration indication state (TCI state).

The TCI state may represent what is applied to a downlink signal/channel. One corresponding to the TCI state applied to an uplink signal/channel may be expressed as a spatial relation.

The TCI state is information regarding quasi-co-location (QCL) of a signal/channel, and may also be referred to as a spatial Rx parameter, spatial relation information, or the like. The TCI state may be configured in the UE for each channel or each signal.

The QCL is an indicator indicating a statistical property of a signal/channel. For example, a case where one signal/channel and another signal/channel have a QCL relation may mean that it is possible to assume that at least one of Doppler shift, Doppler spread, an average delay, a delay spread, and a spatial parameter (for example, a spatial Rx parameter) is identical (in QCL with at least one of these) between a plurality of these different signals/channels.

Note that the spatial Rx parameter may correspond to a reception beam of the UE (for example, a reception analog beam), and the beam may be specified based on spatial QCL. The QCL (or at least one element of the QCL) in the present disclosure may be replaced with spatial QCL (sQCL).

A plurality of types (QCL types) of QCL may be defined. For example, four QCL types A to D may be provided that differ in parameters (or parameter sets) that can be assumed to be identical, and the parameters (which may also be referred to as QCL parameters) are shown below:
- QCL type A (QCL-A): Doppler shift, Doppler spread, average delay, and delay spread,
- QCL type B (QCL-B): Doppler shift and Doppler spread,
- QCL type C (QCL-C): Doppler shift and average delay,
- QCL type D (QCL-D): spatial Rx parameter.

It may be referred to as a QCL assumption for the UE to assume that a certain control resource set (CORESET), channel, or reference signal has a specific QCL (for example, QCL type D) relation with another CORESET, channel, or reference signal.

The UE may determine at least one of a transmission beam (Tx beam) and a reception beam (Rx beam) of a signal/channel based on a TCI state of the signal/channel or the QCL assumption.

The TCI state may be, for example, information regarding the QCL of a target channel (in other words, a reference signal (RS) for the channel) and another signal (for example, another RS). The TCI state may be configured (given in instruction) by higher layer signaling, physical layer signaling, or a combination thereof.

The physical layer signaling may be, for example, downlink control information (DCI).

A channel for which a TCI state or spatial relation is configured (specified) may be, for example, at least one of a physical downlink shared channel (PDSCH), a physical downlink control channel (PDCCH), a physical uplink shared channel (PUSCH), or a physical uplink control channel (PUCCH).

Furthermore, an RS having a QCL relation with the channel may be, for example, at least one of a synchronization signal block (SSB), a channel state information reference signal (CSI-RS)), a measurement reference signal (sounding reference signal (SRS)), a tracking CSI-RS (also referred to as a tracking reference signal (TRS)), or a QCL detection reference signal (also referred to as a QRS).

The SSB is a signal block including at least one of a primary synchronization signal (PSS), a secondary synchronization signal (SSS), or a physical broadcast channel (PBCH). The SSB may be referred to as an SS/PBCH block.

An RS of QCL type X in a TCI state may mean an RS in a QCL type X relation with (DMRS of) a certain channel/signal, and this RS may be referred to as a QCL source of QCL type X in the TCI state.

### (Beam Failure Detection)

In NR, communication is performed using beam forming. For example, a UE and a base station (for example, gNodeB (gNB)) may use a beam used for signal transmission (which is also referred to as a transmission beam, a Tx beam, or the like) or a beam used for signal reception (which is also referred to as a reception beam, an Rx beam, or the like).

In a case where beam forming is used, degradation of radio link quality is assumed because it becomes susceptible to interference by an obstacle. A radio link failure (RLF) may frequently occur due to degradation of the radio link quality. When the RLF occurs, cell reconnection is required, and thus frequent occurrence of the RLF leads to degradation of system throughput.

In the NR, to suppress the occurrence of the RLF, a procedure of switching to another beam (which may also be referred to as beam recovery (BR), beam failure recovery (BFR), Layer 1/Layer 2 (L1/L2) beam recovery, or the like) is performed in a case where quality of a specific beam is degraded. Note that the BFR procedure may be simply referred to as BFR.

Note that a beam failure (BF) in the present disclosure may also be referred to as a link failure.

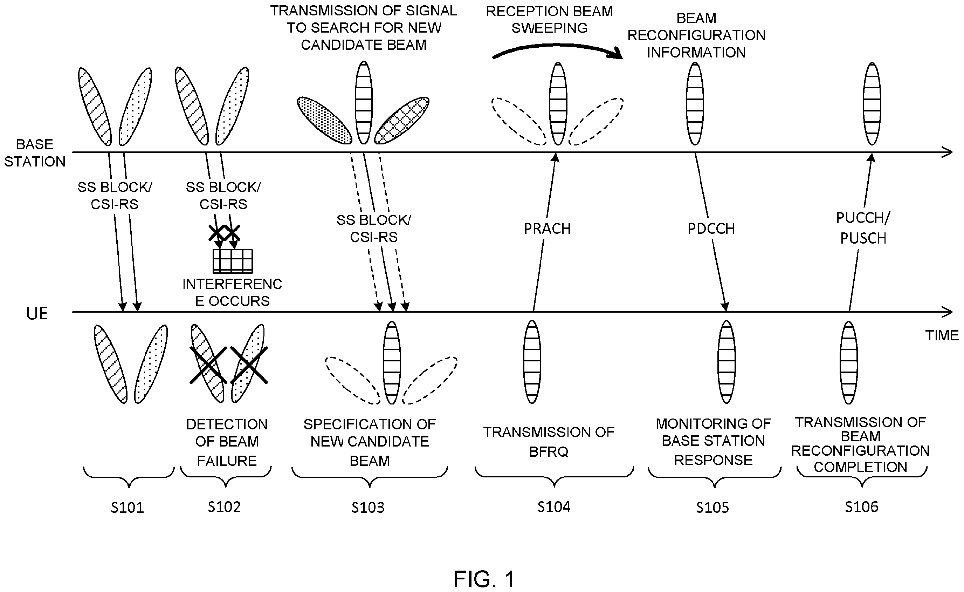

Fig. 1 is a diagram illustrating an example of a beam recovery procedure in Rel. 15 NR. The number of beams, or the like, is an example, and is not limited thereto. In an initial state (step S101) in Fig. 1, the UE performs measurement based on a reference signal (RS) resource transmitted using two beams.

The RS may be at least one of a synchronization signal block (SSB) or a channel state information RS (CSI-RS). Note that the SSB may also be referred to as an SS/physical broadcast channel (PBCH) block, or the like.

The RS may be at least one of a primary synchronization signal (primary SS (PSS)), a secondary synchronization signal (secondary SS (SSS)), a mobility reference signal (mobility RS (MRS)), a signal included in an SSB, the SSB, a CSI-RS, a demodulation reference signal (DMRS), a beam-specific signal, or the like, or a signal configured by extending or changing these. The RS measured in step S101 may be referred to as an RS for beam failure detection (beam failure detection RS (BFD-RS)), an RS (BFR-RS) for use in the beam recovery procedure, or the like.

In step S102, interference in radio waves from the base station occurs, whereby the UE cannot detect the BFD-RS (or reception quality of the RS is degraded). Such interference may occur due to, for example, an effect of an obstacle between the UE and the base station, fading, interference, or the like.

Once a predetermined condition is satisfied, the UE detects a beam failure. For example, the UE may detect occurrence of a beam failure when a block error rate (BLER) is less than a threshold value for all of configured BFD-RSs (BFD-RS resource configurations). When the occurrence of the beam failure is detected, a lower layer (physical (PHY) layer) of the UE may perform notification (indication) of a beam failure instance to a higher layer (MAC layer).

Note that a criterion for determination is not limited to the BLER, and may be reference signal received power in a physical layer (Layer 1 reference signal received power (L1-RSRP)). Further, instead of RS measurement or in addition to RS measurement, beam failure detection may be performed based on a downlink control channel (physical downlink control channel (PDCCH)) or the like. The BFD-RS may be expected to be in a quasi-co-location (QCL) with a DMRS of the PDCCH monitored by the UE.

Here, the QCL is an indicator indicating a statistical property of a channel. For example, a case where one signal/channel and another signal/channel have a QCL relation may mean that it is possible to assume that at least one of Doppler shift, Doppler spread, an average delay, a delay spread, and a spatial parameter (for example, a spatial Rx parameter) is identical (in QCL with at least one of these) between a plurality of these different signals/channels.

Note that the spatial Rx parameter may correspond to a reception beam of the UE (for example, a reception analog beam), and the beam may be specified based on spatial QCL. The QCL (or at least one element of the QCL) in the present disclosure may be replaced with spatial QCL (sQCL).

Information regarding the BFD-RS (for example, an RS index, resource, number, number of ports, precoding, or the like), information regarding beam failure detection (BFD) (for example, the above-described threshold value), or the like may be configured in (notified to) the UE by using higher layer signaling, or the like. The information regarding the BFD-RS may also be referred to as information regarding a resource for BFR, or the like.

In the present disclosure, higher layer signaling may be, for example, any of radio resource control (RRC) signaling, medium access control (MAC) signaling, broadcast information, and the like, or a combination thereof.

For example, a MAC control element (MAC CE), a MAC protocol data unit (PDU), or the like may be used for the MAC signaling. The broadcast information may be, for example, a master information block (MIB), a system information block (SIB), remaining minimum system information (RMSI), other system information (OSI), or the like.

The higher layer (for example, the MAC layer) of the UE may start a predetermined timer (which may also be referred to as a beam failure detection timer) when receiving a beam failure instance notification from the PHY layer of the UE. The MAC layer of the UE may trigger BFR (for example, start any one of random access procedures to be described later) after receiving the beam failure instance notification a certain number of times (for example, beamFailureInstanceMaxCount configured by RRC) or more before the timer expires.

The base station may determine that the UE has detected a beam failure when there is no notification from the UE or when a predetermined signal (beam recovery request in step S104) is received from the UE.

In step S103, the UE starts a search for a new candidate beam to be newly used for communication for beam recovery. The UE may measure a predetermined RS to select a new candidate beam corresponding to the RS. The RS measured in step S103 may be referred to as a new candidate RS, an RS for new candidate beam identification, a new candidate beam identification RS (NCBI-RS), an RS for new beam identification, a new beam identification RS, a new beam identification RS (NBI-RS), a candidate beam identification RS (CBI-RS)), a candidate beam RS (CB-RS), or the like. The NBI-RS may be the same as or different from the BFD-RS. Note that the new candidate beam may be simply referred to as a new beam, a candidate beam, or a candidate RS.

The UE may determine a beam corresponding to an RS that satisfies a predetermined condition as a new candidate beam. The UE may determine a new candidate beam based on, for example, an RS whose L1-RSRP exceeds a threshold value among configured NBI-RSs. Note that a criterion for determination is not limited to L1-RSRP. L1-RSRP regarding an SSB may also be referred to as SS-RSRP. L1-RSRP regarding a CSI-RS may also be referred to as CSI-RSRP.

Information regarding an NBI-RS (for example, an RS resource, number, number of ports, precoding, or the like), information regarding new beam identification (NBI) (for example, the above-described threshold value), or the like may be configured in (notified) the UE using higher layer signaling, or the like. Information regarding the new candidate RS (or NBI-RS) may be acquired based on the information regarding the BFD-RS. The information regarding the NBI-RS may also be referred to as information regarding an NBI resource, or the like.

Note that the BFD-RS, NBI-RS, or the like may be replaced with a radio link monitoring reference signal (RLM-RS).

In step S104, the UE that has specified the new candidate beam transmits a beam recovery request (beam failure recovery request (BFRQ)). The beam failure recovery request may also be referred to as a beam recovery request signal, a beam failure recovery request signal, or the like.

The BFRQ may be transmitted using, for example, at least one of a physical uplink control channel (PUCCH), a physical random access channel (PRACH), a physical uplink shared channel (PUSCH), or a configured grant (CG) PUSCH.

The BFRQ may include information regarding the new candidate beam or new candidate RS specified in step S103. The resource for the BFRQ may be associated with the new candidate beam. Beam information may be notified by using, for example, a beam index (BI), a port index of a predetermined reference signal, an RS index, a resource index (for example, CSI-RS resource indicator (CRI), SSB resource indicator (SSBRI)), or the like.

In Rel. 15 NR, contention-based BFR (CB-BFR) that is BFR based on a contention-based random access (RA) procedure and contention-free BFR (CF-BFR) that is BFR based on a non-contention based random access procedure have been studied. In the CB-BFR or the CF-BFR, the UE may transmit a preamble (which is also referred to as an RA preamble, a physical random access channel (PRACH), an RACH preamble, or the like) as the BFRQ by using a PRACH resource.

In the CB-BFR, the UE may transmit a preamble randomly selected from one or more preambles. Meanwhile, in the CF-BFR, the UE may transmit a preamble uniquely allocated to the UE from the base station. In the CB-BFR, the base station may allocate an identical preamble to a plurality of UEs. In the CF-BFR, the base station may allocate preambles individually to the UEs.

Note that the CB-BFR and the CF-BFR may also be referred to as CB PRACH-based BFR (contention-based PRACH-based BFR (CBRA-BFR)) and CF PRACH-free BFR (contention-free PRACH-based BFR (CFRA-BFR)), respectively. The CBRA-BFR may also be referred to as CBRA for BFR. The CFRA-BFR may also be referred to as CFRA for BFR.

In either the CB-BFR or the CF-BFR, the information regarding the PRACH resource (RA preamble) may be notified by, for example, higher layer signaling (RRC signaling and the like). For example, the information may include information indicating a correspondence relationship between the detected DL-RS (beam) and the PRACH resource, and different PRACH resources may be associated with each DL-RS.

In step S105, the base station that has detected the BFRQ transmits a response signal (which may also be referred to as a gNB response or the like) for the BFRQ from the UE. The response signal may include reconfiguration information (for example, DL-RS resource configuration information) for one or more beams.

The response signal may be transmitted in, for example, a UE common search space of PDCCH. The response signal may be notified by using PDCCH (DCI) scrambled in cyclic redundancy check (CRC) by an identifier of the UE (for example, cell-radio RNTI (C-RNTI)). The UE may determine at least one of a transmission beam or a reception beam to be used, based on beam reconfiguration information.

The UE may monitor the response signal based on at least one of a control resource set (CORESET) for BFR or a search space set for BFR.

For the CB-BFR, contention resolution may be determined to be successful in a case where the UE receives a PDCCH corresponding to the C-RNTI regarding the UE itself.

Regarding the processing of step S105, a period for the UE to monitor a response from the base station (for example, gNB) to the BFRQ may be configured. The period may be referred to as, for example, a gNB response window, a gNB window, a beam recovery request response window, or the like. The UE may retransmit the BFRQ in a case where no gNB response is detected within the window period.

In step S106, the UE may transmit a message indicating that beam reconfiguration is completed to the base station. The message may be transmitted by the PUCCH or PUSCH, for example.

Beam recovery success (BR success) may represent a case where the processing reaches step S106, for example. On the other hand, beam recovery failure (BR failure) may correspond to, for example, a case where the number of times of BFRQ transmission has reached a predetermined number, or a beam-failure-recovery-timer has expired.

Rel. 15 supports performing the beam recovery procedure (for example, notification of BFRQ) for a beam failure detected by an SpCell (PCell/PSCell) using a random access procedure.

On the other hand, Rel. 16 supports performing the beam recovery procedure (for example, notification of BFRQ (step S104 in Fig. 1)) for the beam failure detected by the SCell using at least one of PUCCH (for example, a scheduling request (SR)) transmission for BFR or MAC CE (for example, UL-SCH) transmission for BFR. For example, the UE may use MAC CE-based two steps to transmit information regarding the beam failure. The information regarding the beam failure may include information regarding a cell in which the beam failure is detected, and information regarding a new candidate beam (or a new candidate RS index).

### [Step 1]

When a BF is detected, a PUCCH-BFR (scheduling request (SR)) may be transmitted from the UE to the PCell/PSCell.

The PUCCH-BFR may also be referred to as PUCCH-SR, PUCCH-SR for BFR, or PUCCH for SR. Then, a UL grant (DCI) for the following Step 2 may be transmitted from the PCell/PSCell to the UE. When a beam failure is detected and there is a MAC CE (or UL-SCH) for transmitting information regarding the new candidate beam, Step 1 (for example, PUCCH transmission) may be omitted and Step 2 (for example, MAC CE transmission) may be performed.

### [Step 2]

Then, the UE may transmit information (for example, a cell index) regarding the cell in which the beam failure is detected (failed) and information regarding the new candidate beam to the base station (PCell/PSCell) through an uplink channel (for example, the PUSCH) using the MAC CE. Thereafter, after a predetermined period (for example, 28 symbols) from reception of the response signal from the base station through the BFR procedure, the QCL of PDCCH/PUCCH/PDSCH/PUSCH may be updated to a new beam.

Note that numbers of these steps are merely numbers for description, and a plurality of these steps may be combined, or the order of these steps may be changed. Further, whether or not to perform BFR may be configured in the UE by using higher layer signaling.

### (Multi-TRPs)

In NR, it has been studied to allow one or more transmission/reception points (TRPs) (multi-TRPs (MTRPs)) to perform DL transmission to the UE by using one or more panels (multi-panels) . Further, it has been studied to allow the UE to perform UL transmission to one or more TRPs by using one or more panels.

Note that the plurality of TRPs may correspond to the same cell identifier (ID), or may correspond to different cell IDs. The cell ID may be a physical cell ID or a virtual cell ID.

The multi-TRPs (for example, TRPs #1 and #2) are connected by an ideal/non-ideal backhaul, and information, data, and the like may be exchanged. A different codeword (CW) and a different layer may be transmitted from each TRP of the multi-TRPs. Non-coherent joint transmission (NCJT) may be used as one form of multi-TRP transmission.

In the NCJT, for example, the TRP #1 performs modulation mapping and layer mapping on a first codeword, performs first precoding in a first number of layers (for example, two layers), and transmits a first PDSCH. In addition, the TRP #2 performs modulation mapping and layer mapping on a second codeword, performs second precoding in a second number of layers (for example, two layers), and transmits a second PDSCH.

Note that a plurality of PDSCHs (multi-PDSCHs) subjected to the NCJT may be defined as partially or completely overlapping at least one of a time domain or a frequency domain. That is, the first PDSCH from a first TRP and the second PDSCH of a second TRP may overlap at least one of time resources or frequency resources.

The first PDSCH and the second PDSCH may be assumed not to be in quasi-co-located (QCL) relation (not to be quasi-co-location (QCL)). Reception of the multi-PDSCHs may be replaced with simultaneous reception of PDSCHs that are not of a certain QCL type (for example, QCL type D).

A plurality of PDSCHs (which may be referred to as multiple PDSCHs) from the multi-TRPs may be scheduled by using one piece of DCI (single DCI, single PDCCH) (single master mode, single-DCI-based multi-TRPs). A plurality of PDSCHs from the multi-TRPs may be scheduled by using a plurality of pieces of DCI (multi-DCI or multiple PDCCHs) (multi-master mode, multi-DCI-based multi-TRPs).

In Ultra-Reliable and Low Latency Communications (URLLC) for multi-TRPs, support of PDSCH (transport block (TB) or codeword (CW)) repetition across multi-TRPs has been studied. It has been studied that a repetition scheme (URLLC scheme, reliability enhancement scheme, for example, schemes 1a, 2a, 2b, 3, and 4) that spans multi-TRPs on a frequency domain or a layer (spatial) domain or a time domain is supported. In Scheme 1a, multi-PDSCH from multi-TRPs is space division multiplexing (SDM). In Schemes 2a and 2b, PDSCHs from multi-TRPs are subjected to frequency division multiplexing (FDM). In Scheme 2a, a redundancy version (RV) is the same for multi-TRPs. In Scheme 2b, the RV may be the same or different for multi-TRPs. In Schemes 3 and 4, multi-PDSCHs from multi-TRPs are subjected to time division multiplexing (TDM). In Scheme 3, multi-PDSCHs from multi-TRPs are transmitted in one slot. In Scheme 4, multi-PDSCHs from multi-TRPs are transmitted in different slots.

Such a multi-TRP scenario can perform more flexible transmission control using a high-quality channel.

In RRC configuration information for linking a plurality of pairs of PDCCHs and PDSCHs having a plurality of TRPs, one control resource set (CORESET) in PDCCH configuration information (PDCCH-Config) may correspond to one TRP, to support intra-cell (having the same cell ID) and inter-cell (having different cell IDs) multi-TRP transmission based on the plurality of PDCCHs.

When at least one of the conditions 1 and 2 described below is satisfied, the UE may judge that it is multi-DCI-based multi-TRPs. In this case, the TRP may be replaced with a CORESET pool index.

### [Condition 1]

A CORESET pool index of 1 is configured.

### [Condition 2]

Two different values (for example, 0 and 1) of the CORESET pool index are configured.

When the condition described below is satisfied, the UE may judge that it is single-DCI-based multi-TRPs. In this case, the two TRPs may be replaced with two transmission configuration indication (TCI) states indicated by MAC CE/DCI.

### [Condition]

In order to indicate one or two TCI states for one code point in the TCI field in the DCI, an "enhanced TCI states

activation/deactivation for UE-specific PDSCH MAC CE" is used.

The DCI for a common beam indication may be a UE-specific DCI format (for example, DL DCI format (for example, 1_1 and 1_2), UL DCI format (for example, 0 1 and 0_2)) or a UE-group common DCI format.

### (Multi-TRP PDCCH)

For reliability of multi-TRP PDCCH based on a non-single frequency network (SFN), the following studies 1 to 3 have been studied.
[Study 1] Coding/rate matching is based on one repetition, and the same coded bit is repeated in other repetitions.
[Study 2] Each iteration has the same control channel element (CCE) number and the same coded bits, and corresponds to the same DCI payload.
[Study 3] Two or more PDCCH candidates are explicitly linked to each other. The UE learns the link before decoding.

The following options 1-2, 1-3, 2, and 3 for PDCCH repetition have been studied.

### [Option 1-2]

Two sets of PDCCH candidates (within a given search space (SS) set) are respectively associated with two TCI states of the CORESET. Here, the same CORESET, the same SS set, and PDCCH repetition in different monitoring occasions are used.

### [Option 1-3]

Two sets of PDCCH candidates are respectively associated with two SS sets. Both SS sets are associated with a CORESET, and each SS set is associated with only one TCI state for that CORESET. Here, the same CORESET and two SS sets, are used.

### [Option 2]

One SS set is associated with two different CORESETs.

### [Option 3]

Two SS sets are respectively associated with two CORESETs.

In this way, it has been studied that two PDCCH candidates in the two SS sets for PDCCH repetition are supported, and the two SS sets are explicitly linked.

### (SFN PDCCH)

For PDCCH/CORESET defined in Rel. 15, one TCI state without a CORESET pool index (CORESETPoolIndex) (which may be referred to as TRP information (TRP Info)) is configured for one CORESET.

For enhancement of PDCCH/CORESET defined in Rel. 16, in the multi-DCI-based multi-TRPs, a CORESET pool index is configured for each

### CORESET.

In Rel. 17 and subsequent releases, the following enhancements 1 and 2 concerning PDCCH/CORESET have been studied.

In a case where multiple antennas with the same cell ID (small antenna, transmission/reception point) form a single frequency network (SFN), for one CORESET, up to two TCI states may be configured/activated in higher layer signaling (RRC signaling/MAC CE) (enhancement 1). The SFN contributes to at least one of operation and reliability improvement of high speed train (HST).

Further, in repeated transmissions of the PDCCH (may be simply referred to as "repetition"), two PDCCH candidates in two search space sets are linked, and each search space set is associated with a corresponding CORESET (enhancement 2). The two search space sets may be associated with the same or different CORESETs. For one CORESET, one (up to one) TCI state may be configured/activated in higher layer signaling (RRC signaling/MAC CE).

In a case where two search space sets are associated with different CORESETs with different TCI states, it may mean that it is a repeated transmission of multi-TRPs. In a case where two search space sets are associated with a same CORESET (CORESET in a same TCI state), it may mean that it is a repeated transmission of a single

### TRP.

### (HST)

In LTE, it is difficult to arrange the high speed train (HST) in a tunnel. A large antenna performs transmission out of/into the tunnel. For example, transmission power of the large antenna is about 1 to 5 W. For handover, it is important that the UE sends out of the tunnel before entering the tunnel. For example, transmission power of the small antenna is about 250 mW. A plurality of small antennas (transmission/reception points) having the same cell ID and a distance of 300 m forms the single frequency network (SFN). All small antennas in the SFN transmit a same signal at a same time on a same PRB. It is assumed that the terminal transmits and receives data to and from one base station. Actually, a plurality of transmission/reception points transmit the same DL signal. During high-speed movement, transmission/reception points in units of several kilometers form one cell. Handover is performed in a case of crossing cells. As a result, the handover frequency can be reduced.

In the NR, it is assumed that a beam transmitted from a transmission point (for example, RRH) is used to communicate with a terminal (hereinafter, also referred to as UE) included in a moving body such as a high speed train (HST). In an existing system (for example, Rel. 15), it is supported to perform communication with a moving body by transmitting a uni-directional beam from an RRH.

In Rel. 17 and subsequent releases, it has been studied that the base station performs a Doppler prior (preliminary) compensation (correction) scheme (a pre-Doppler compensation scheme, a Doppler pre-compensation scheme, or a network (NW) pre-compensation scheme (NW pre-compensation scheme or HST NW pre-compensation scheme)) in the transmission of downlink (DL) signals/channels from the TRP to the UE in the HST. The TRP performs the Doppler compensation in advance when transmitting the DL signal/channel to the UE, so that it is possible to reduce the influence of the Doppler shift at the time of receiving the DL signal/channel in the UE. In the present disclosure, the Doppler pre-compensation scheme may be a combination of Scheme 1 and pre-compensation of the Doppler shift by the base station.

In the Doppler pre-compensation scheme, it has been studied that the TRS from each TRP is transmitted without performing the Doppler pre-compensation, and the PDSCH from each TRP is transmitted with the Doppler pre-compensation.

In the Doppler pre-compensation scheme, the TRP that forms a beam on a traveling direction side of the movement path and the TRP that forms a beam on an opposite direction side of the traveling direction of the movement path perform the DL signal/channel transmission to the UE in the HST after performing the Doppler correction.

Further, in Rel. 17 and subsequent releases, it has been studied to dynamically switch between the single TRP and the SFN by using a TCI field (TCI state field). For example, one or two TCI states are configured/indicated at each TCI code point (code point of TCI field and DCI code point) using RRC information element/MAC CE (for example, Enhanced TCI States Activation/Deactivation for UE-specific PDSCH MAC CE)/DCI (TCI field). The UE may determine to receive the PDSCH of the single TRP when one TCI state is configured/indicated. Further, the UE may also determine to receive PDSCH of SFN using multi-TRPs when two TCI states are configured/indicated.

### (BFR)

Meanwhile, in a future radio communication system (for example, Rel. 17 and subsequent releases), beam management of a UE having a plurality of panels (multi-panels) or extension of beam management using a plurality of transmission/reception points (multi-transmission/reception points (TRP)) has been studied.

When a terminal (UE) performs communication using a plurality of transmission/reception points (TRP)/UE panels, it is also conceivable to perform beam failure detection for each TRP/UE panel. However, there are insufficient considerations as to how to control the beam failure detection (BFD) or beam failure recovery (BFR) procedure in each TRP/UE panel.

For example, in the BFR procedure, the UE that has notified information such as a beam failure/new candidate RS performs subsequent transmission/reception processing (for example, QCL assumption/spatial relation assumption/UL power control) based on the response (for example, base station response/gNB response) from the base station.

### [BFR for PCell/PSCell in Rel. 15]

In the BFR procedure of Rel. 15, the UE transmits the PRACH when a radio link failure is detected in the PCell/PSCell. The base station response may be a response signal (for example, PDCCH transmission) to the PRACH (for example, the PRACH for BFR) notified from the UE. The PDCCH may be transmitted by using a search space set configured by higher layer signaling (for example, recoverySearchSpaceId). The UE operation after the base station response may be PUCCH transmission/PDCCH monitoring based on a predetermined condition.

For example, when the base station response (for example, PDCCH) is received, the UE may perform control to transmit the PUCCH using the same spatial filter as the last PRACH transmission in the same cell as the PRACH transmission. In addition, the transmission power of the PUCCH may be controlled on the basis of a power control parameter (for example, qᵤ = 0, q_{d} = q_{new}, 1 = 0). These predetermined conditions (for example, spatial filter/transmission power) may be applied 28 symbols after the last symbol of the initially received base station response (for example, PDCCH) until the UE receives an activation command of PUCCH spatial relation information (for example, PUCCH-SpatialRelationInfo) or until the UE is provided with PUCCH spatial relation information (for example, PUCCH-SpatialRelationInfo) of a PUCCH resource.

Here, qᵤ may be a PUCCH P0 ID (p0-PUCCH-Id) indicating the PUCCH P0 (P0-PUCCH) in the PUCCH P0 set (p0-Set). q_{d} is an RS resource index of an RS (path loss reference RS) for PUCCH path-loss calculation (estimation). q_{new} is the index of the new candidate beam. 1 represents an index of a PUCCH power control adjustment state (closed loop).

Further, when the base station response (for example, PDCCH) is received, the UE may assume the same antenna port quasi-co-location parameter as that associated with the predetermined index (for example, q_{new}) for PDCCH monitoring in the control resource set with the predetermined index (for example, index 0) after the predetermined period. The predetermined period of time may be after 28 symbols from the last symbol of the base station response (for example, PDCCH) initially received by the UE.

If the BFR MAC CE is transmitted to the PCell or the PSCell in the Msg3 or the MsgA of the contention-based random access procedure, and the PUCCH resource is provided with the PUCCH spatial relation information (for example, PUCCH-SpatialRelationInfo), after 28 symbols from the last symbol of the PDCCH reception determining the completion of the random access procedure, the UE transmits the PUCCH on the same cell as the PRACH transmission. The PUCCH transmission uses the same spatial filter as the last PRACH transmission. The PUCCH transmission uses power determined by using qᵤ = 0, q_{d} = q_{new}, and 1 = 0. Here, q_{new} is the SS/PBCH block index selected for the last PRACH transmission.

### [BFR for SCell in Rel. 16]

In the BFR procedure of Rel. 16, when the radio link quality in the SCell becomes worse than a given value, the UE may transmit the corresponding SCell index, information (for example, q_{new}) regarding the new candidate beam, and the like using a PUSCH MAC CE (for example, the first PUSCH/1^{st} PUSCH MAC CE). The base station response may be a response signal (for example, PDCCH transmission) to a MAC CE (for example, the initial PUSCH) notified from the UE. The PDCCH may be applied to a DCI format that schedules a PUSCH transmission with the same HARQ process number as the transmission of the initial PUSCH and a toggled NDI field value. The UE operation after the base station response may be PUCCH transmission/PDCCH monitoring based on a predetermined condition.

For example, when the base station response (for example, PDCCH) is received, the UE may monitor the PDCCH in all the control resource sets in the SCell indicated by the MAC CE. In this case, the UE may monitor the PDCCH using the same antenna port quasi-co-location parameter as the corresponding index (for example, q_{new}).

Further, when the base station response (for example, PDCCH) is received and a predetermined condition is satisfied, the UE may control transmission of the PUCCH using the same spatial domain filter as the spatial domain filter corresponding to q_{new} for periodic CSI-RS or SS/PBCH block reception in the PUCCH Cell. In this case, the transmission power of the PUCCH may be controlled based on a power control parameter (for example, qᵤ = 0, q_{d} = q_{new}, 1 = 0) .

The predetermined condition may be, for example, at least one or all of a condition that the spatial relation information (for example, a predetermined higher layer parameter (for example, PUCCH-SpatialRelationInfo) for the PUCCH) for the PUCCH is provided (condition 1), a condition that the PUCCH having a link recovery request (LRR) is not transmitted or is transmitted by the PCell/PSCell (condition 2), and a condition that the PUCCH SCell is included in the SCell indicated by the MAC CE (condition 3).

### (Analysis)

The study on the PDCCH activated for two TCI states is not in progress. For example, in Rel. 17 and subsequent releases, the following PDCCH extensions may be supported.
(1) PDCCH reception by two linked PDCCHs (two linked PDCCHs). In this case, one TCI state is activated for each CORESET.
(2) SFN-PDCCH for URLLC. In this case, two TCI states are activated for each CORESET.
(3) SFN-PDCCH for HST-SFN (for example, the Doppler pre-compensation scheme). In this case, two TCI states are activated for each

### CORESET.

It has been studied that, in multi-DCI-based multi-TRPs, CORESET for two TCI states cannot be activated in Rel. 17 and subsequent releases (corresponding to a third embodiment described later). For example, the introduction of enhanced MAC CE signaling for PDCCH activating two TCI states in SFN-based PDCCH transmission has been studied. It has been studied that, when the CORESET is configured with a different CORESET pool index value within a BWP, the enhanced MAC CE signaling does not apply to any of the configured CORESET within that BWP.

In single DCI-based multi-TRPs, CORESET for two TCI states may be activated. In this case, the study on the operation of the UE with respect to the PDCCH after the BFR of the multi-TRPs is not in progress (corresponding to the first embodiment described later). Further, the study on the operation of the UE in a case where a BFR specific to a cell (that is, one BFD-RS set) is configured for the single TRP or the single DCI-multi-TRPs for the CORESET corresponding to the two TCI states is not in progress (corresponding to the second embodiment to be described later).

In a case where the cell-specific (per cell) BFR is configured in a single TRP, the single DCI-based multi-TRPs, or a multi-DCI-based MTRP, the study on the operation of the UE on the PUCCH resource configured/activated for two spatial relations/TCI states after the BFR is not in progress (corresponding to fourth to sixth embodiments to be described later).

Therefore, the present inventors have studied a method capable of appropriately performing control corresponding to CORESET/PUCCH corresponding to two spatial relations/TCI states, and conceived the present embodiment.

Hereinafter, embodiments according to the present disclosure will be described in detail with reference to the drawings. The respective aspects may be applied individually or in combination.

In the present disclosure, "A/B/C" and "at least one of A, B and C" may be replaced with each other. In the present disclosure, a cell, a serving cell, a CC, a carrier, a BWP, a DL BWP, a UL BWP, an active DL BWP, an active UL BWP, and a band may be replaced with each other. In the present disclosure, an index, an ID, an indicator, and a resource ID may be replaced with each other. In the present disclosure, a sequence, a list, a set, a group, a cohort, a cluster, a subset, and the like may be replaced with each other. In the present disclosure, support, control, controllable, operate, and operable may be replaced with each other.

In the present disclosure, configure, activate, update, indicate, enable, specify, and select may be replaced with each other.

In the present disclosure, a beam, a spatial domain filter, a spatial setting, QCL, a TCI state, a UL TCI state, a unified TCI state, a unified beam, a common TCI state, a common beam, a TCI assumption, a QCL assumption, a QCL parameter, a spatial domain receive filter, a UE spatial domain receive filter, a UE receive beam, a DL beam, a DL reception beam, a DL precoding, a DL precoder, a DL-RS, an RS of QCL type D of a TCI state/QCL assumption, an RS of QCL type A of a TCI state/QCL assumption, a spatial relation, a spatial domain transmission filter, a UE spatial domain transmission filter, a UE transmission beam, a UL beam, a UL transmission beam, a UL precoding, a UL precoder, and a PL-RS may be replaced with each other. In the present disclosure, the QCL type X-RS, the DL-RS associated with QCL type X, the DL-RS with QCL type X, a source of the DL-RS, the SSB, the CSI-RS, and the SRS may be replaced with each other.

In the present disclosure, a TRP, a transmission point, a panel, a DMRS port group, a CORESET pool, and one of two TCI states associated with one code point of a TCI field may be replaced with each other.

In the present disclosure, the TRP may be replaced with a panel of a TRP (or a base station), an RS group, an antenna port group, a spatial relation group, a QCL group, a TCI state, a TCI state group, a CORESET group, a CORESET pool, or the like. Further, a TRP index may be replaced with an RS group index, an antenna port group index, a QCL group index, a TCI state index, a TCI state group index, a CORESET group index, a CORESET pool index, or the like.

In the present disclosure, a single TRP, a single TRP system, single TRP transmission, and single PDSCH may be replaced with one another. In the present disclosure, multi-TRPs, a multi-TRP system, multi-TRP transmission, and multi-PDSCHs may be replaced with each other. In the present disclosure, a single DCI, a single PDCCH, multi-TRPs based on the single DCI, and activating two TCI states on at least one TCI code point may be replaced with each other.

In the present disclosure, a single TRP, a channel using the single TRP, a channel using one TCI state/spatial relation, not activating multi-TRPs by RRC/DCI, not activating a plurality of TCI states/spatial relations by RRC/DCI, and not configuring one CORESET pool index (CORESETPoolIndex) value for any CORESET and not mapping any code point in a TCI field to two TCI states may be replaced with each other.

In the present disclosure, multi-TRPs, a channel using multi-TRPs, a channel using a plurality of TCI states/spatial relations, activating multi-TRPs by RRC/DCI, activating a plurality of TCI states/spatial relations by RRC/DCI, and at least one of multi-TRPs based on single DCI and multi-TRPs based on multi-DCI may be replaced with each other. In the present disclosure, multi-DCI-based multi-TRPs and that a CORESET pool index (CORESETPoolIndex) value of 1 is configured for the CORESET may be replaced with each other. In the present disclosure, single-DCI-based multi-TRPs and that at least one code point of the TCI field is mapped to two TCI states may be replaced with each other.

In the present disclosure, in a case where a single DCI is applied, an n-th TRP (n is an arbitrary integer (for example, 1 or 2)) may correspond to an n-th TCI state and an n-th code division multiplexing (CDM) group.

In the present disclosure, in a case where multiple pieces of DCI are applied, a first TRP may correspond to a CORESET without CORESETPoolIndex or a CORESET with CORESETPoolIndex = 0. A second TRP may correspond to a CORESET with CORESETPoolIndex = 1. When multiple pieces of DCI are applied, the CORESET pool index may be configured.

In the present disclosure, the serving cell/cell may be replaced with SpCell, PCell, PSCell, or SCell. In the following description, two TRPs may correspond to the serving cell, or three or more TRPs may correspond to the serving cell.

In the present disclosure, a BFD RS for which a beam failure is detected, a failed BFD RS, a TRP for which a beam failure is detected, a failed TRP, a UE panel for which a beam failure is detected, and a failed UE panel may be replaced with each other.

In the present disclosure, a spatial relation, spatial relation information, a PUCCH resource, and a PUCCH spatial relation may be replaced with each other. In the present disclosure, a TRP, a TRP ID, a BFD-RS set ID, an NBI-RS set ID, and a CORESET pool index may be replaced with each other. In the present disclosure, a failure and a beam failure may be replaced with each other.

In the present disclosure, PUCCH spatial relation information may be replaced with a TCI state for UL, a unified UL TCI state, or a unified joint DL/UL TCI state, a spatial relation, and a spatial domain filter. In the present specification, a predetermined ID may be, for example, information used for identifying a TRP (for example, identification information regarding the TRP), and may be replaced with TRP identification information, a TRP-ID, a group ID, or a new ID.

In the present disclosure, PUCCH, PUCCH transmission, a PUCCH resource, a PUCCH occasion, PUCCH spatial relation information, and a spatial relation may be replaced with each other.

The network (for example, a base station) may notify/configure a UE with a predetermined ID (hereinafter, also referred to as TRP identification information)). For example, the base station may notify the UE of the TRP identification information by using higher layer signaling (or a higher layer parameter)/DCI.

The TRP identification information may be configured/defined (or correspondingly) in association with the PUCCH spatial relation information. When multiple pieces of PUCCH space-related information are configured in the UE, each piece of PUCCH space-related information may be respectively associated with a predetermined TRP identification information.

In the present disclosure, a single TRP and an SFN may be replaced with each other. In the present disclosure, a HST, an HST scheme, a high-speed movement scheme, scheme 1, scheme 2, an NW pre-compensation scheme, HST scheme 1, HST scheme 2, and an HST NW pre-compensation scheme may be replaced with each other.

In the present disclosure, a PDSCH/PDCCH using a single TRP, a PDSCH/PDCCH based on a single TRP, and a single TRP PDSCH/PDCCH may be replaced with each other. Furthermore, in the present disclosure, a PDSCH/PDCCH using an SFN, a PDSCH/PDCCH using an SFN in multiple, the PDSCH/PDCCH based on the SFN, and the SFN PDSCH/PDCCH may be replaced with each other.

In the present disclosure, it may be assumed that CORESET corresponding to two TCI states (that is, SFN-PDCCH) is configured/activated. In the present disclosure, the processing of updating the TCI state/spatial relation to q_{new} or the like may be performed by at least one of the UE and the base station. q_{new} used for the update may be q_{new} transmitted from the UE to the base station by the MAC CE. In the present disclosure, a cell, a component carrier (CC), and a TRP may be replaced with each other. The beam recovery request and a beam failure report may be replaced with each other.

### (Radio Communication Method)

### <First Embodiment>

### [Precondition 1]

In a single DCI-based MTRP, in a cell in which two sets of BFD-RS (per BFR of TRP) are explicitly/implicitly configured, if q_{new} (index of new candidate beam) is found/reported in an extended BFR MAC CE of the failed TRP (in a case of 1/2 TRP failures), then the operation of the UE on PDCCH beam update may be applied to the failed TRP on the cell (CC) after receiving a response of the base station (gNB).

In the present disclosure, a failed TRP (failed TRP) may mean a TRP in which a beam failure has occurred. The operation (UE behavior) of the UE in the present disclosure may be at least one part of the BFR procedure or a control operation after the BFR.

### [Aspect 0]

The configuration as described in Precondition 1 may not be permitted. Alternatively, it may be permitted according to the capability of the UE. In the single DCI-based multi-TRPs, the UE may not assume that the CORESET corresponding to two TCI states is configured/activated (the CORESET may not be configured/activated), with or without the condition "when two BFD-RS sets are configured/determined". Aspect 0 corresponds to a QCL assumption for PDCCH after BFR of multi-TRPs.

### [Aspect 1]

The operation of the UE on the PDCCH of the failed TRP may be applied only to the CORESET corresponding to one TCI state and not to the PDCCHs corresponding to two TCI states. That is, the beam update of the PDCCH corresponding to the two TCI states may not be performed.

The PDCCH corresponding to the 2TCI state may not be implicitly/explicitly associated with the BFD-RS set ID/NBI-RS set ID/TRP-ID. In this case, the UE may not monitor the PDCCH corresponding to the two TCI states until receiving/sending a new RRC signaling/MAC CE for updating the TCI state of the PDCCH.

### [Aspect 2]

In a case of applying the operation of the UE to the CORESET corresponding to the two TCI states at a failed TRP (when the CORESET is applied), the UE may update the QCL (two TCI states) to one TCI state and update the QCL (two TCI states) to q_{new}. In this case, the updated CORESET corresponds to one TCI state.

The PDCCHs corresponding to the two TCI states are associated with the BFD-RS set ID/NBI-RS set ID/TRP-ID for a beam failure, and the two TCI states correspond to one (the same) TRP.

### [Aspect 3]

In a case of applying the operation of the UE to the CORESET corresponding to the two TCI states of the failed TRP (when the CORESET is applied), the UE may update the two (both) TCI states to q_{new}. That is, the updated CORESET corresponds to two same TCI states.

The PDCCHs corresponding to the two TCI states are associated with the BFD-RS set ID/NBI-RS set ID/TRP-ID for a beam failure, and the two TCI states correspond to one (the same) TRP.

### [Aspect 4]

In a case of applying the operation of the UE to the CORESET corresponding to the two TCI states (when the CORESET is applied), if the UE reports a failure of one TRP and one q_{new}, one TCI state may be updated to q_{new}, and the other TCI states may not be updated. When the UE reports two TRP failures and two q_{new}, the UE may update each TCI state of the CORESET to the corresponding q_{new}.

Because each TCI state of a CORESET is associated with the BFD-RS set ID/NBI-RS set ID/TRP-ID for a beam failure, the corresponding TCI state may be updated.

Because of being associated with the BFD-RS set ID/NBI-RS set ID/TRP-ID for a beam failure with two TCI states, even in a case where the two TCI states correspond to one (and the same) TRP, it is possible to update one beam to q_{new} and not change the other TCI state.

### <Second Embodiment>

### [Precondition 2]

In a single TRP or single DCI-based multi-TRPs, in a case of cells with one explicitly/implicitly configured BFD-RS (cell-specific (per cell) BFR configuration), the UE may find/report q_{new} with the BFR MAC CE of the failed cell (CC) and apply the operation of the UE on the PDCCH beam update to the failed CC after receiving a response of the base station (gNB). In the present disclosure, the failed CC may mean a CC (cell) in which a beam failure has occurred.

### [Aspect 0]

In the single DCI-based multi-TRPs, the UE may not assume that the CORESET corresponding to two TCI states is configured/activated (the CORESET may not be configured/activated), with or without the condition "when one BFD-RS set is configured/determined". Further, whether such a configuration is possible may depend on the capability of the UE.

### [Aspect 1]

The operation of the UE on the PDCCH of the failed CC may be applied only to the CORESET in one TCI state and not to the PDCCHs in two TCI states. That is, the beam update of the PDCCH corresponding to the two TCI states is not performed.

This aspect is applied to the single TRP or the single DCI-based multi-TRPs. Note that the UE may not monitor the PDCCH corresponding to the two TCI states until it receives/sends a new RRC signaling/MAC CE to update the TCI state of the PDCCH.

### [Aspect 2]

In a case of applying the operation of the UE to the CORESET corresponding to the two TCI states of the failed CC (when the CORESET is applied), the UE may update the QCL to one TCI state and update the QCL to q_{new}. That is, the TCI state of the CORESET after the update is one. This aspect may be applied to the single TRP or the single DCI-based multi-TRPs.

### [Aspect 3]

In a case of applying the operation of the UE to the CORESET corresponding to the two TCI states of the failed CC (when the CORESET is applied), the UE may update the two (both) TCI states to q_{new}. That is, the updated CORESET corresponds to the two same TCI states. This aspect may be applied to the single TRP or the single DCI-based multi-TRPs.

### [Aspect 4]

In a case of applying the operation of the UE to the CORESET corresponding to the two TCI states of the failed CC (when the CORESET is applied), the UE may update the TCI state of one of the two TCI states (first/second TCI state or TCI state corresponding to minimum/maximum TCI state ID) to q_{new} and may not update the other TCI states. That is, the updated CORESET corresponds to the two same TCI states. This aspect may be applied to the single TRP or the single DCI-based multi-TRPs.

### <Third Embodiment>

### [Precondition 3]

At least one of the following cases 1 and 2 may be supported in the future radio communication system (for example, Rel. 17 and subsequent releases). In a case where the CORESET pool index is configured (that is, the multi-DCI-based multi-TRPs), the CORESET corresponding to the two TCI states may be configured/activated.

### [[Case 1]]

In the multi-DCI-based multi-TRPs, if q_{new} is found/reported in the extended BFR MAC CE of a failed TRP (in a case of one/two TRP failures) in a cell in which two sets of BFD-RS (per BFR of TRP) are explicitly/implicitly configured, the UE may apply its operation on the PDCCH beam update to the failed TRPs on the CC after receiving a response of the gNB.

### [[Case 2]]

In the multi-DCI-based multi-TRPs, for cells with one explicitly/implicitly configured BFD-RS (BFR in cell units), q_{new} is found/reported in the BFR MAC CE of the failed CC, and the UE may apply the operation of the UE on the PDCCH beam update to the failed CC after receiving the response of the gNB.

For example, the processing of the first embodiment may be performed on the premise of Case 1 of the above Precondition 3. In addition, the processing of the second embodiment may be performed on the premise of Case 2 of Precondition 3.

### <Fourth Embodiment>

### [Precondition 4]

For a cell with one explicitly/implicitly configured BFD-RS on a single TRP (cell-specific (per cell) BFR configuration), the UE may find/report q_{new} in the BFR MAC CE of a failed CC and, after receiving the response of the gNB, apply the operation of the UE and power control parameters (for example, qᵤ = 0, q_{d} = q_{new}, and 1 = 0 described above) for the new beam of the PUCCH to the CC. Processing when PUCCH is configured/activated for one/two spatial relations/TCI states/beams will be described.

### [Aspect 1]

The operation of the UE on the PUCCH of the failed CC may be applied only to the PUCCH corresponding to one spatial relation, and may not be applied to the PUCCH corresponding to two spatial relations. That is, the UE may not update the beam/transmission power control (transmission power control parameter) for the PUCCH corresponding to the two spatial relations. In this case, the UE may not send the PUCCH corresponding to the two spatial relations until receiving/sending a new RRC signaling/MAC CE for updating the beam of the PUCCH.

### [Aspect 2]

In a case of applying the operation of the UE to the PUCCH corresponding to the two spatial relations of the failed CC (when the PUCCH is applied), the UE may update the QCL (TCI state) to one spatial relation of q_{new} and update the transmission power control parameter to one set of parameters as described in (BFR) above. In this case, the number of beams of the PUCCH after the update is one. In addition, the same beam/TPC update operation may be applied regardless of whether there is one or two spatial relations corresponding to the PUCCH.

### [Aspect 3]

In a case of applying the operation of the UE to the PUCCH corresponding to the two spatial relations of the failed CC (when the PUCCH is applied), the UE may update both spatial relations to q_{new} and update the two sets of transmission power control parameters to the values described in (BFR) above. In this case, the updated PUCCH corresponds to two identical beams.

### [Aspect 4]

In a case of applying the operation of the UE to the PUCCH corresponding to the two spatial relations of the failed CC (when the PUCCH is applied), the UE may update one spatial relation (for example, a first/second spatial relation or a spatial relation corresponding to a minimum/maximum spatial relation ID) to q_{new}, may update one set of transmission power control parameters, and may not change the other spatial relation and the other set of TPC parameters.

### <Fifth Embodiment>

### [Precondition 5]

Precondition 5 may be a content in which "single TRP" of Precondition 4 is replaced with "single DCI-based multi-TRPs".

### [Aspect 0]

The configuration in Precondition 5 may not be allowed, or may be allowed according to the capability of the UE. In the single DCI-based multi-TRPs, the UE may not assume that PUCCHs for two spatial relations are configured.

For the aspects 1 to 4, the same content as that of the fourth embodiment may be applied.

### <Sixth Embodiment>

### [Precondition 6]

Precondition 6 may be a content in which "single TRP" of Precondition 4 is replaced with the "multi-DCI-based multi-TRPs".

### [Aspect 0]

The configuration in Precondition 6 may not be allowed, or may be allowed according to the capability of the UE. In the multi-DCI-based multi-TRPs, the UE may not assume that PUCCHs for two spatial relations are configured.

For the aspects 1 to 4, the same content as that of the fourth embodiment may be applied.

### <UE Capability>

The UE may transmit (report) UE capability information indicating whether to support at least one of the processes in the present disclosure to the network (base station). At least one of the processes in the present disclosure may be applied only to a UE that has reported specific UE capability information or supports the specific UE capability. Furthermore, the UE may receive information indicating/configuring at least one of the processes in the present disclosure by DCI/MAC CE/higher layer signaling (for example, RRC) or the like. The information may correspond to UE capability information transmitted by the UE. The UE capability information may be, for example, at least one of the following (1) to (12) (corresponding to the first to third embodiments) and (13) to (21) (corresponding to the third to sixth embodiments).

(1) When the single DCI-based multi-TRPs are configured, whether to support CORESET configured/activated for two TCI states.
(2) When TRP is configured per BFR in the single DCI-based multi-TRPs, whether to support CORESET that is configured/activated for two TCI states.
(3) When BFR per cell is configured in the single DCI-based multi-TRPs, whether to support CORESET configured/activated for two TCI states.
(4) After BFR per TRP/cell is configured in the single DCI-based multi-TRPs, whether to support update of QCL/q_{new} of PDCCH/CORESET corresponding to two TCI states.
(5) Whether to support update of one or two QCL/q_{new} (or an update to one or two QCL/q_{new}) for PDCCH/CORESET corresponding to two TCI states after BFR per TRP/cell.
(6) After BFR per cell of single TRP (no multi-TRPs), whether to support update of QCL/q_{new} of PDCCH/CORESET corresponding to two TCI states.
(7) Whether to support update of one or two QCL/q_{new} (or an update to one or two QCL/q_{new}) for PDCCH/CORESET corresponding to two TCI states after BFR per cell.
(8) When the multi-DCI-based multi-TRPs are configured, whether to support CORESET configured/activated for two TCI states.
(9) When BFR per TRP is configured in multi-DCI-based multi-TRPs, whether to support CORESET configured/activated for two TCI states.
(10) When BFR per cell is configured in multi-DCI-based multi-TRPs, whether to support CORESET configured/activated for two TCI states.
(11) After BFR per TRP/cell in multi-DCI-based multi-TRPs, whether to support QCL/q_{new} update of PDCCH/CORESET corresponding to two TCI states.
(12) Whether to support update of one or two QCL/q_{new} (or an update to one or two QCL/q_{new}) for PDCCH/CORESET corresponding to two TCI states after BFR per TRP/cell.
(13) When single DCI/multi-DCI-based MTRP is configured, whether to support PUCCH configured/activated for two spatial relations.
(14) When BFR per cell is configured in the single DCI/multi-DCI-based MTRP, whether to support PUCCH configuration/activation corresponding to two spatial relations.
(15) After BFR per cell is configured in the single DCI/multi-DCI-based MTRP, whether to support QCL/transmission power control parameter update of the PUCCH corresponding to two spatial relations.
(16) Whether to support an update of one or two QCL/transmission power control parameter (or an update to one or two QCL/transmission power control parameter sets) for the PUCCH corresponding to the two spatial relations after BFR per TRP/cell.
(17) After BFR per cell in a single TRP (no multi-TRPs), whether to support QCL/transmission power control parameter update of the PUCCH corresponding to two spatial relations.
(18) Whether to support an update of one or two QCL/transmission power control parameters (or an update to one or two sets of QCL/transmission power control parameters) for PUCCHs corresponding to two spatial relations after BFR per cell.
(19) When BFR per TRP is configured for the single DCI/multi-DCI-based MTRP, whether to support PUCCH configured/activated for two spatial relations.
(20) After BFR per TRP is configured in the single DCI/multi-DCI-based MTRP, whether to support an update of a QCL/transmission power control parameter of the PUCCH corresponding to two spatial relations.
(21) Whether to support an update of one or two QCL/transmission power control parameter (or updates to one or two sets of QCL/transmission power control parameters) for the PUCCH corresponding to the two spatial relations after BFR per TRP.

### (Radio Communication System)

Hereinafter, a configuration of a radio communication system according to one embodiment of the present disclosure will be described. In this radio communication system, communication is performed using any one of the radio communication methods according to the embodiments of the present disclosure or a combination thereof.

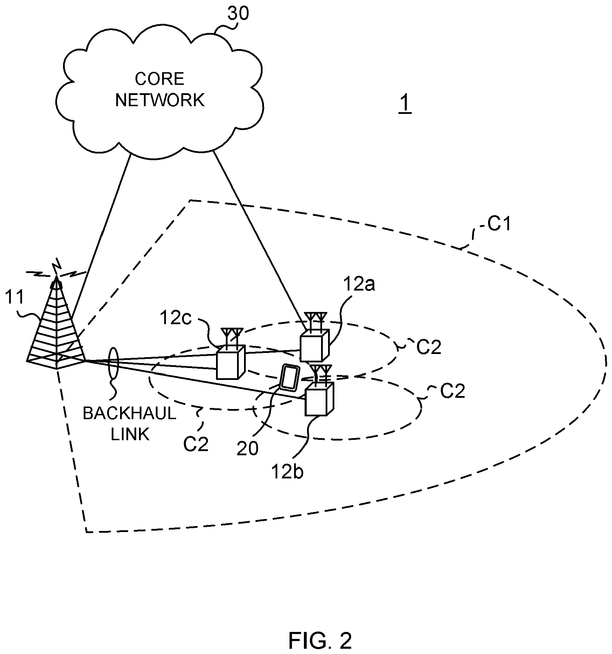

Fig. 2 is a diagram illustrating an example of a schematic configuration of a radio communication system according to one embodiment. A radio communication system 1 may be a system that implements communication using long term evolution (LTE), 5th generation mobile communication system New Radio (5G NR), and the like drafted as the specification by third generation partnership project (3GPP).

Further, the radio communication system 1 may support dual connectivity (multi-RAT dual connectivity (MR-DC)) between a plurality of radio access technologies (RATs). The MR-DC may include dual connectivity between LTE (evolved universal terrestrial radio access (E-UTRA)) and NR (E-UTRA-NR dual connectivity (EN-DC)), dual connectivity between NR and LTE (NR-E-UTRA dual connectivity (NE-DC)), and the like.

In the EN-DC, an LTE (E-UTRA) base station (eNB) is a master node (MN), and an NR base station (gNB) is a secondary node (SN). In the NE-DC, an NR base station (gNB) is MN, and an LTE (E-UTRA) base station (eNB) is SN.

The radio communication system 1 may support dual connectivity between a plurality of base stations in the same RAT (for example, dual connectivity in which both MN and SN are NR base stations (gNB) (NR-NR dual connectivity (NN-DC)).

The radio communication system 1 may include a base station 11 that forms a macro cell C1 with a relatively wide coverage, and base stations 12 (12a to 12c) that are disposed within the macro cell C1 and that form small cells C2 narrower than the macro cell C1. A user terminal 20 may be positioned in at least one cell. The arrangement, number, and the like of cells and the user terminals 20 are not limited to the aspects illustrated in the drawings. Hereinafter, the base stations 11 and 12 will be collectively referred to as "base stations 10" when the base stations 11 and 12 are not distinguished from each other.

The user terminal 20 may be connected to at least one of the plurality of base stations 10. The user terminal 20 may use at least one of carrier aggregation (CA) using a plurality of component carriers (CC) and dual connectivity (DC).

Each CC may be included in at least one of a first frequency band (frequency range 1 (FR1)) or a second frequency band (frequency range 2 (FR2)). The macro cell C1 may be included in FR1, and the small cell C2 may be included in FR2. For example, FR1 may be a frequency band of 6 GHz or less (sub-6 GHz), and FR2 may be a frequency band higher than 24 GHz (above-24 GHz). Note that the frequency bands, definitions, and the like of the FR1 and FR2 are not limited thereto, and, for example, the FR1 may correspond to a frequency band higher than the FR2.

Further, the user terminal 20 may perform communication in each CC using at least one of time division duplex (TDD) and frequency division duplex (FDD).

The plurality of base stations 10 may be connected to each other in a wired manner (for example, an optical fiber, an X2 interface, or the like in compliance with common public radio interface (CPRI)) or in a radio manner (for example, NR communication). For example, when NR communication is used as a backhaul between the base stations 11 and 12, the base station 11 corresponding to a higher-level station may be referred to as an integrated access backhaul (IAB) donor, and the base station 12 corresponding to a relay station (relay) may be referred to as an IAB node.

The base station 10 may be connected to a core network 30 via another base station 10 or directly. The core network 30 may include, for example, at least one of an evolved packet core (EPC), a 5G core network (5GCN), a next generation core (NGC), and the like.

The user terminal 20 may a terminal that corresponds to at least one of communication methods such as LTE, LTE-A, and 5G.

In the radio communication system 1, a radio access method based on orthogonal frequency division multiplexing (OFDM) may be used. For example, in at least one of downlink (DL) or uplink (UL), cyclic prefix OFDM (CP-OFDM), discrete Fourier transform spread OFDM (DFT-s-OFDM), orthogonal frequency division multiple access (OFDMA), single carrier frequency division multiple access (SC-FDMA), and the like may be used.

The radio access method may be referred to as a waveform. Note that in the radio communication system 1, another radio access method (for example, another single carrier transmission method or another multi-carrier transmission method) may be used as the UL and DL radio access method.

In the radio communication system 1, as a downlink channel, a physical downlink shared channel (PDSCH), a physical broadcast channel (PBCH), a physical downlink control channel (PDCCH), or the like shared by the user terminals 20 may be used.

Further, in the radio communication system 1, as an uplink channel, a physical uplink shared channel (PUSCH), a physical uplink control channel (PUCCH), a physical random access channel (PRACH), or the like shared by the user terminals 20 may be used.

User data, higher layer control information, a system information block (SIB), and the like are transmitted on the PDSCH. The PUSCH may transmit the user data, higher layer control information, and the like. Furthermore, a master information block (MIB) may be transmitted on the PBCH.

Lower layer control information may be transmitted on the PDCCH. The lower layer control information may include, for example, downlink control information (DCI) including scheduling information of at least one of the PDSCH and the PUSCH.

Note that the DCI that schedules the PDSCH may be referred to as DL assignment, DL DCI, or the like, and the DCI that schedules PUSCH may be referred to as UL grant, UL DCI, or the like. Note that the PDSCH may be replaced with DL data, and the PUSCH may be replaced with UL data.

For detection of the PDCCH, a control resource set (CORESET) and a search space may be used. The CORESET corresponds to a resource that searches for DCI. The search space corresponds to a search area and a search method for PDCCH candidates. One CORESET may be associated with one or more search spaces. UE may monitor CORESET associated with a certain search space based on search space configuration.

One search space may correspond to a PDCCH candidate corresponding to one or more aggregation levels. One or more search spaces may be referred to as a search space set. Note that "search space", "search space set", "search space configuration", "search space set configuration", "CORESET", "CORESET configuration", and the like in the present disclosure may be replaced with each other.

Uplink control information (UCI) including at least one of channel state information (CSI), delivery confirmation information (which may be referred to as, for example, hybrid automatic repeat request acknowledgement (HARQ-ACK), ACK/NACK, or the like), scheduling request (SR), and the like may be transmitted by the PUCCH. A random access preamble for establishing connection with a cell may be transmitted on the PRACH.

Note that in the present disclosure, downlink, uplink, and the like may be expressed without "link". Further, various channels may be expressed without adding "physical" at the beginning thereof.

In the radio communication system 1, a synchronization signal (SS), a downlink reference signal (DL-RS), and the like may be transmitted. In the radio communication system 1, a cell-specific reference signal (CRS), a channel state information reference signal (CSI-RS), a demodulation reference signal (DMRS), a positioning reference signal (PRS), a phase tracking reference signal (PTRS), or the like may be transmitted as the DL-RS.

The synchronization signal may be, for example, at least one of a primary synchronization signal (PSS) or a secondary synchronization signal (SSS). A signal block including the SS (PSS or SSS) and the PBCH (and the DMRS for the PBCH) may be referred to as an SS/PBCH block, an SS block (SSB), or the like. Note that, the SS, the SSB, or the like may also be referred to as a reference signal.

Furthermore, in the radio communication system 1, a measurement reference signal (sounding reference signal (SRS)), a demodulation reference signal (DMRS), or the like may be transmitted as an uplink reference signal (UL-RS). Note that, DMRSs may be referred to as "user terminal-specific reference signals (UE-specific Reference Signals)".

### (Base Station)

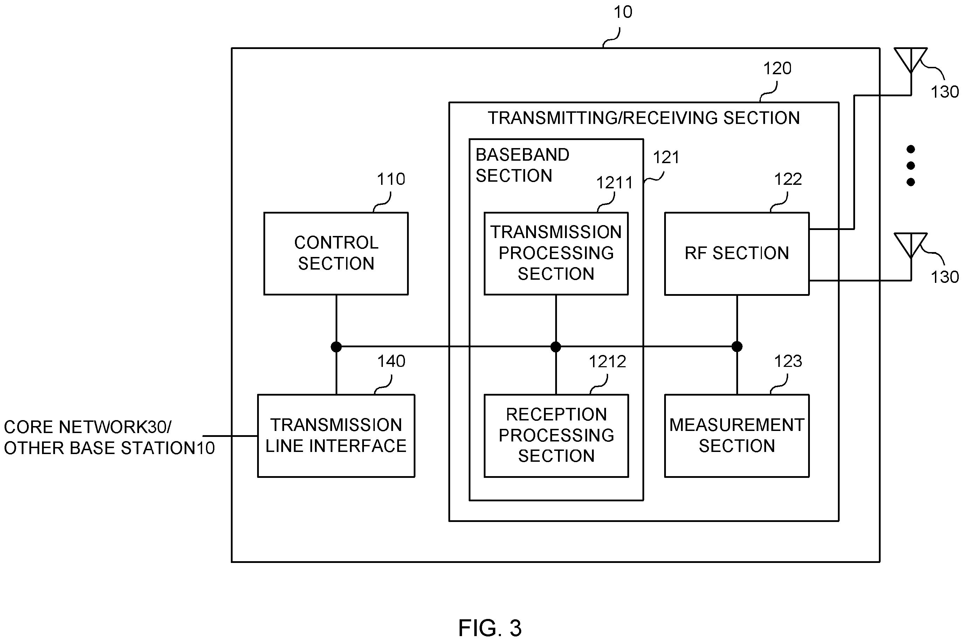

Fig. 3 is a diagram illustrating an example of a configuration of the base station according to one embodiment. The base station 10 includes a control section 110, a transmitting/receiving section 120, a transmission/reception antenna 130, and a transmission line interface 140. Note that one or more of the control sections 110, one or more of the transmitting/receiving sections 120, one or more of the transmission/reception antennas 130, and one or more of the transmission line interfaces 140 may be included.

Note that this example mainly describes a functional block which is a characteristic part of the present embodiment, and it may be assumed that the base station 10 also has another functional block necessary for radio communication. A part of processing of each section described below may be omitted.

The control section 110 controls the entire base station 10. The control section 110 can be constituted by a controller, a control circuit, or the like, which is described based on common recognition in the technical field to which the present disclosure relates.

The control section 110 may control signal generation, scheduling (for example, resource allocation or mapping), and the like. The control section 110 may control transmission/reception, measurement, and the like using the transmitting/receiving section 120, the transmission/reception antenna 130, and the transmission line interface 140. The control section 110 may generate data to be transmitted as a signal, control information, a sequence, and the like, and may forward the data, the control information, the sequence, and the like to the transmitting/receiving section 120. The control section 110 may perform call processing (such as configuration or releasing) of a communication channel, management of the state of the base station 10, and management of a radio resource.

The transmitting/receiving section 120 may include a baseband section 121, a radio frequency (RF) section 122, and a measurement section 123. The baseband section 121 may include a transmission processing section 1211 and a reception processing section 1212. The transmitting/receiving section 120 can include a transmitter/receiver, an RF circuit, a baseband circuit, a filter, a phase shifter, a measurement circuit, a transmission/reception circuit, and the like that are described on the basis of common recognition in the technical field related to the present disclosure.

The transmitting/receiving section 120 may be configured as an integrated transmitting/receiving section, or may be configured by a transmitting section and a receiving section. The transmitting section may include the transmission processing section 1211 and the RF section 122. The receiving section may be constituted by the reception processing section 1212, the RF section 122, and the measurement section 123.

The transmission/reception antenna 130 can include an antenna described based on common recognition in the technical field to which the present disclosure relates, for example, an array antenna or the like.

The transmitting/receiving section 120 may transmit the above-described downlink channel, synchronization signal, downlink reference signal, and the like. The transmitting/receiving section 120 may receive the above-described uplink channel, uplink reference signal, and the like.

The transmitting/receiving section 120 may form at least one of a transmission beam and a reception beam by using digital beam forming (for example, precoding), analog beam forming (for example, phase rotation), and the like.

The transmitting/receiving section 120 (transmission processing section 1211) may perform packet data convergence protocol (PDCP) layer processing, radio link control (RLC) layer processing (for example, RLC retransmission control), medium access control (MAC) layer processing (for example, HARQ retransmission control), and the like on, for example, data, control information, and the like acquired from the control section 110, to generate a bit string to be transmitted.

The transmitting/receiving section 120 (transmission processing section 1211) may perform transmission processing such as channel encoding (which may include error correction encoding), modulation, mapping, filtering processing, discrete Fourier transform (DFT) processing (if necessary), inverse fast Fourier transform (IFFT) processing, precoding, or digital-analog conversion on the bit string to be transmitted, to output a baseband signal.

The transmitting/receiving section 120 (RF section 122) may perform modulation to a radio frequency band, filtering processing, amplification, and the like on the baseband signal, and may transmit a signal in the radio frequency band via the transmission/reception antenna 130.

Meanwhile, the transmitting/receiving section 120 (RF section 122) may perform amplification, filtering processing, demodulation to a baseband signal, and the like on the signal in the radio frequency band received by the transmission/reception antenna 130.

The transmitting/receiving section 120 (reception processing section 1212) may apply reception processing such as analog-digital conversion, fast Fourier transform (FFT) processing, inverse discrete Fourier transform (IDFT) processing (if necessary), filtering processing, demapping, demodulation, decoding (which may include error correction decoding), MAC layer processing, RLC layer processing, or PDCP layer processing on the acquired baseband signal, to acquire user data and the like.

The transmitting/receiving section 120 (measurement section 123) may perform measurement on the received signal. For example, the measurement section 123 may perform radio resource management (RRM), channel state information (CSI) measurement, and the like based on the received signal. The measurement section 123 may measure received power (for example, reference signal received power (RSRP)), received quality (for example, reference signal received quality (RSRQ), a signal to interference plus noise ratio (SINR), a signal to noise ratio (SNR)), signal strength (for example, received signal strength indicator (RSSI)), propagation path information (for example, CSI), and the like. The measurement result may be output to the control section 110.

The transmission line interface 140 may transmit/receive a signal (backhaul signaling) to and from an apparatus included in the core network 30, another base stations 10, and the like, and may acquire, transmit, and the like user data (user plane data), control plane data, and the like for the user terminal 20.

Note that the transmitting section and the receiving section of the base station 10 in the present disclosure may include at least one of the transmitting/receiving section 120, the transmission/reception antenna 130, and the transmission line interface 140.

Note that in a case where any of a single transmission/reception point (TRP), single downlink control information (DCI)-based multi-TRPs, or multi-DCI-based multi-TRPs are applied, the transmitting/receiving section 120 may transmit a response to the beam failure report.

The control section 110 may perform control assuming a control resource set (CORESET) corresponding to two transmission configuration indication (TCI) states.

### (User Terminal)

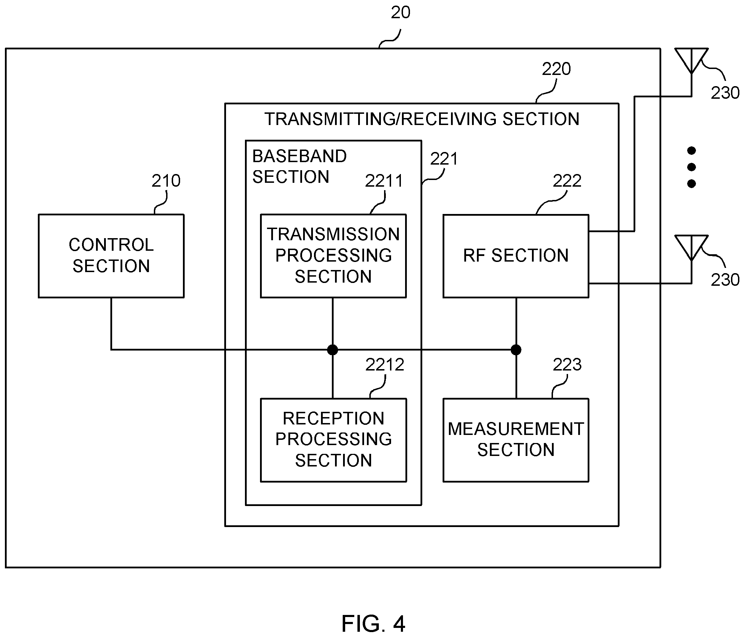

Fig. 4 is a diagram illustrating an example of the configuration of the user terminal according to one embodiment. The user terminal 20 includes a control section 210, a transmitting/receiving section 220, and a transmission/reception antenna 230. Note that one or more of the control sections 210, one or more of the transmitting/receiving sections 220, and one or more of the transmission/reception antennas 230 may be included.

Note that, although this example mainly describes functional blocks of a characteristic part of the present embodiment, it may be assumed that the user terminal 20 includes other functional blocks that are necessary for radio communication as well. A part of processing of each section described below may be omitted.

The control section 210 controls the entire user terminal 20. The control section 210 can include a controller, a control circuit, and the like that are described based on common recognition in the technical field related to the present disclosure.

The control section 210 may control signal generation, mapping, and the like. The control section 210 may control transmission/reception, measurement, and the like using the transmitting/receiving section 220 and the transmission/reception antenna 230. The control section 210 may generate data, control information, a sequence, and the like to be transmitted as signals, and may forward the data, control information, sequence, and the like to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be implemented by a transmitter/receiver, an RF circuit, a baseband circuit, a filter, a phase shifter, a measurement circuit, a transmitting/receiving circuit, and the like that are described based on common recognition in the technical field related to the present disclosure.

The transmitting/receiving section 220 may be formed as an integrated transmitting/receiving section, or may include a transmitting section and a receiving section. The transmitting section may include the transmission processing section 2211 and the RF section 222. The receiving section may include the reception processing section 2212, the RF section 222, and the measurement section 223.

The transmission/reception antenna 230 can include an antenna described based on common recognition in the technical field to which the present disclosure relates, for example, an array antenna or the like.

The transmitting/receiving section 220 may receive the above-described downlink channel, synchronization signal, downlink reference signal, and the like. The transmitting/receiving section 220 may transmit the above-described uplink channel, uplink reference signal, and the like.

The transmitting/receiving section 220 may form at least one of a transmission beam or a reception beam by using digital beam forming (for example, precoding), analog beam forming (for example, phase rotation), and the like.

The transmitting/receiving section 220 (transmission processing section 2211) may perform PDCP layer processing, RLC layer processing (for example, RLC retransmission control), MAC layer processing (for example, HARQ retransmission control), and the like on, for example, data, control information, and the like acquired from the control section 210, to generate a bit string to be transmitted.

The transmitting/receiving section 220 (transmission processing section 2211) may perform transmission processing such as channel encoding (which may include error correction encoding), modulation, mapping, filtering processing, DFT processing (if necessary), IFFT processing, precoding, or digital-analog conversion on the bit string to be transmitted, to output a baseband signal.

Note that whether or not to apply DFT processing may be determined based on configuration of transform precoding. When the transform precoding is enabled for a channel (for example, PUSCH), the transmitting/receiving section 220 (transmission processing section 2211) may perform DFT processing as the transmission processing to transmit the channel by using a DFT-s-OFDM waveform, and when not, DFT processing does not have to be performed as the transmission processing.

The transmitting/receiving section 220 (RF section 222) may perform modulation to a radio frequency band, filtering processing, amplification, and the like on the baseband signal, to transmit a signal in the radio frequency band via the transmission/reception antenna 230.

Meanwhile, the transmitting/receiving section 220 (RF section 222) may perform amplification, filtering processing, demodulation to a baseband signal, and the like on the signal in the radio frequency band received by the transmission/reception antenna 230.

The transmitting/receiving section 220 (reception processing section 2212) may apply reception processing such as analog-digital conversion, FFT processing, IDFT processing (if necessary), filtering processing, demapping, demodulation, decoding (which may include error correction decoding), MAC layer processing, RLC layer processing, or PDCP layer processing on the acquired baseband signal, to acquire user data and the like.

The transmitting/receiving section 220 (measurement section 223) may perform measurement on the received signal. For example, the measurement section 223 may perform RRM measurement, CSI measurement, and the like based on the received signal. The measurement section 223 may measure received power (for example, RSRP), received quality (for example, RSRQ, SINR, or SNR), signal strength (for example, RSSI), propagation path information (for example, CSI), and the like. The measurement result may be output to the control section 210.

Note that the transmitting section and the receiving section of the user terminal 20 in the present disclosure may include at least one of the transmitting/receiving section 220 or the transmission/reception antenna 230.

Note that the transmitting/receiving section 220 may receive a response to the beam failure report in a case where any of a single transmission/reception point (TRP), single downlink control information (DCI)-based multi-TRPs, or multi-DCI-based multi-TRPs are applied.

The control section 210 may perform control assuming control resource sets (CORESET) corresponding to two transmission configuration indication (TCI) states. In a case where the CORESET corresponding to two TCI states is applied, the control section 210 may update the two TCI states to an index of a new candidate beam. In a case where the CORESET corresponding to two TCI states is applied, the control section 210 may update one of the two TCI states to an index of a new candidate beam. In a case where a physical uplink control channel (PUCCH) corresponding to two spatial relations is applied, the control section 210 may update the two spatial relations and a transmission power parameter.

### (Hardware Configuration)

Note that the block diagrams that have been used to describe the above embodiments illustrate blocks in functional units. These functional blocks (components) may be implemented in arbitrary combinations of at least one of hardware or software. Further, the method for implementing each functional block is not particularly limited. That is, each functional block may be implemented by a single apparatus physically or logically aggregated, or may be implemented by directly or indirectly connecting two or more physically or logically separate apparatuses (in a wired manner, a radio manner, or the like, for example) and using these plural apparatuses. The functional block may be implemented by combining the one apparatus or the plurality of apparatuses with software.

Here, the function includes, but is not limited to, determining, judging, calculating, computing, processing, deriving, investigating, searching, ascertaining, receiving, transmitting, outputting, accessing, solving, selecting, choosing, establishing, comparing, assuming, expecting, regarding, broadcasting, notifying, communicating, forwarding, configuring, reconfiguring, allocating, mapping, assigning, and the like. For example, a functional block (component) that has a transmission function may be referred to as a transmitting section (transmitting unit), a transmitter, and the like. In any case, as described above, the implementation method is not particularly limited.

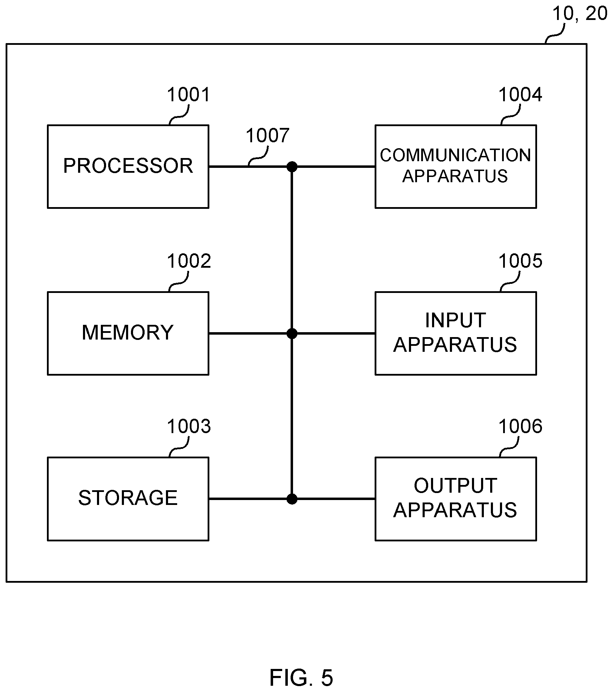

For example, the base station, the user terminal, and the like according to one embodiment of the present disclosure may function as a computer that executes the processing of the radio communication method of the present disclosure. Fig. 5 is a diagram illustrating an example of the hardware configuration of the base station and the user terminal according to one embodiment. Physically, the above-described base station 10 and user terminal 20 may be formed as a computer apparatus that includes a processor 1001, a memory 1002, a storage 1003, a communication apparatus 1004, an input apparatus 1005, an output apparatus 1006, a bus 1007, and the like.

Note that in the present disclosure, the terms such as an apparatus, a circuit, a device, a section, or a unit can be replaced with each other. The hardware configuration of the base station 10 and the user terminal 20 may be designed to include one or more of the apparatuses illustrated in the drawings, or may be designed not to include some apparatuses.

For example, although only one processor 1001 is illustrated, a plurality of processors may be provided. Further, the processing may be executed by one processor, or the processing may be executed by two or more processors simultaneously or sequentially, or using other methods. Note that the processor 1001 may be implemented with one or more chips.

Each function of the base station 10 and the user terminal 20 is implemented by, for example, predetermined software (program) being read on hardware such as the processor 1001 and the memory 1002, by which the processor 1001 performs operations, controlling communication via the communication apparatus 1004, and controlling at least one of reading or writing of data at the memory 1002 and the storage 1003.

The processor 1001 may control the whole computer by, for example, running an operating system. The processor 1001 may be implemented by a central processing unit (CPU) including an interface with peripheral equipment, a control apparatus, an operation apparatus, a register, and the like. For example, at least a part of the above-described control section 110 (210), transmitting/receiving section 120 (220), and the like may be implemented by the processor 1001.

Further, the processor 1001 reads programs (program codes), software modules, data, and the like from at least one of the storage 1003 or the communication apparatus 1004 into the memory 1002, and performs various types of processing according to these. As the program, a program that causes a computer to execute at least a part of the operation described in the above-described embodiment is used. For example, the control section 110 (210) may be implemented by control programs that are stored in the memory 1002 and that operate on the processor 1001, and other functional blocks may be similarly implemented.

The memory 1002 is a computer-readable recording medium, and may include, for example, at least one of a read only memory (ROM), an erasable programmable ROM (EPROM), an electrically EPROM (EEPROM), a random access memory (RAM), or other appropriate storage media. The memory 1002 may be referred to as a register, a cache, a main memory (primary storage apparatus), and the like. The memory 1002 can store programs (program codes), software modules, and the like that are executable for implementing the radio communication method according to one embodiment of the present disclosure.

The storage 1003 is a computer-readable recording medium, and may include, for example, at least one of a flexible disk, a floppy (registered trademark) disk, a magneto-optical disk (for example, a compact disc ROM (CD-ROM) and the like), a digital versatile disk, a Blu-ray (registered trademark) disk), a removable disk, a hard disk drive, a smart card, a flash memory device (for example, a card, a stick, or a key drive), a magnetic stripe, a database, a server, or other appropriate storage media. The storage 1003 may be referred to as "secondary storage apparatus".

The communication apparatus 1004 is hardware (transmission/reception device) for performing inter-computer communication via at least one of a wired network or a wireless network, and is referred to as, for example, a network device, a network controller, a network card, a communication module, and the like. The communication apparatus 1004 may include a high frequency switch, a duplexer, a filter, a frequency synthesizer, and the like in order to implement, for example, at least one of frequency division duplex (FDD) or time division duplex (TDD). For example, the transmitting/receiving section 120 (220), the transmission/reception antenna 130 (230), and the like described above may be implemented by the communication apparatus 1004. The transmitting/receiving section 120 (220) may be implemented by being physically or logically separated into the transmitting section 120a (220a) and the receiving section 120b (220b).

The input apparatus 1005 is an input device for receiving input from the outside (for example, a keyboard, a mouse, a microphone, a switch, a button, a sensor and so on). The output apparatus 1006 is an output device that performs output to the outside (for example, a display, a speaker, a light emitting diode (LED) lamp, or the like). Note that the input apparatus 1005 and the output apparatus 1006 may be provided in an integrated structure (for example, a touch panel).

Furthermore, these pieces of apparatus, including the processor 1001, the memory 1002 and so on are connected by the bus 1007 so as to communicate information. The bus 1007 may be formed with a single bus, or may be formed with buses that vary between pieces of apparatus.

Further, the base station 10 and the user terminal 20 may include hardware such as a microprocessor, a digital signal processor (DSP), an application specific integrated circuit (ASIC), a programmable logic device (PLD), or a field programmable gate array (FPGA), and some or all of the functional blocks may be implemented by using the hardware. For example, the processor 1001 may be implemented with at least one of these pieces of hardware.

### (Modifications)

Note that terms described in the present disclosure and terms necessary for understanding the present disclosure may be replaced with terms that have the same or similar meanings. For example, a channel, a symbol, and a signal (signal or signaling) may be replaced with each other. Further, the signal may be a message. The reference signal can be abbreviated as an RS, and may be referred to as a pilot, a pilot signal, and the like, depending on which standard applies. Further, a component carrier (CC) may be referred to as a cell, a frequency carrier, a carrier frequency, and the like.

A radio frame may include one or more periods (frames) in the time domain. Each of the one or more periods (frames) included in the radio frame may be referred to as a subframe. Further, the subframe may include one or more slots in the time domain. The subframe may be a fixed duration (for example, 1 ms) that is not dependent on numerology.

Here, the numerology may be a communication parameter used for at least one of transmission or reception of a certain signal or channel. For example, the numerology may indicate at least one of subcarrier spacing (SCS), a bandwidth, a symbol length, a cyclic prefix length, a transmission time interval (TTI), the number of symbols per TTI, a radio frame configuration, specific filtering processing performed by a transceiver in the frequency domain, specific windowing processing performed by a transceiver in the time domain, or the like.

The slot may include one or more symbols in the time domain (orthogonal frequency division multiplexing (OFDM) symbols, single carrier frequency division multiple access (SC-FDMA) symbols, and the like). In addition, a slot may be a time unit based on numerology.

The slot may include a plurality of mini slots. Each mini slot may include one or more symbols in the time domain. Further, the mini slot may be referred to as a subslot. Each mini slot may include fewer symbols than the slot. A PDSCH (or PUSCH) transmitted in a time unit larger than the mini slot may be referred to as "PDSCH (PUSCH) mapping type A". A PDSCH (or PUSCH) transmitted using a mini slot may be referred to as PDSCH (PUSCH) mapping type B.

A radio frame, a subframe, a slot, a mini slot and a symbol all represent the time unit in signal communication. The radio frame, the subframe, the slot, the mini slot, and the symbol may be called by other applicable names, respectively. Note that time units such as the frame, the subframe, the slot, the mini slot, and the symbol in the present disclosure may be replaced with each other.

For example, one subframe may be referred to as TTI, a plurality of consecutive subframes may be referred to as TTI, or one slot or one mini slot may be referred to as TTI. That is, at least one of the subframe or the TTI may be a subframe (1 ms) in the existing LTE, may be a period shorter than 1 ms (for example, one to thirteen symbols), or may be a period longer than 1 ms. Note that the unit to represent the TTI may be referred to as a "slot," a "mini slot" and so on, instead of a "subframe".

Here, a TTI refers to the minimum time unit of scheduling in radio communication, for example. For example, in the LTE system, a base station performs scheduling to allocate radio resources (a frequency bandwidth, transmission power, and the like that can be used in each user terminal) to each user terminal in TTI units. Note that the definition of TTIs is not limited to this.

The TTI may be a transmission time unit of a channel-coded data packet (transport block), a code block, a codeword, and the like or may be a processing unit of scheduling, link adaptation, and the like Note that, when the TTI is given, a time interval (for example, the number of symbols) to which a transport block, a code block, a codeword, or the like is actually mapped may be shorter than the TTI.

Note that, when one slot or one mini slot is referred to as a "TTI," one or more TTIs (that is, one or multiple slots or one or more mini slots) may be the minimum time unit of scheduling. Further, the number of slots (the number of mini slots) to constitute this minimum time unit of scheduling may be controlled.

A TTI having a duration of 1 ms may be referred to as a usual TTI (TTI in 3GPP Rel. 8 to 12), a normal TTI, a long TTI, a usual subframe, a normal subframe, a long subframe, a slot, or the like. A TTI that is shorter than the usual TTI may be referred to as a shortened TTI, a short TTI, a partial TTI (or fractional TTI), a shortened subframe, a short subframe, a mini slot, a subslot, a slot, or the like.

Note that a long TTI (for example, a normal TTI, a subframe, and the like) may be replaced with a TTI having a time duration exceeding 1 ms, and a short TTI (for example, a shortened TTI) may be replaced with a TTI having a TTI duration less than the TTI duration of a long TTI and not less than 1 ms.

A resource block (RB) is the unit of resource allocation in the time domain and the frequency domain, and may include one or more contiguous subcarriers in the frequency domain. The number of subcarriers included in the RB may be the same regardless of the numerology, and may be twelve, for example. The number of subcarriers included in the RB may be determined based on a numerology.

In addition, an RB may include one or more symbols in the time domain, and may be one slot, one mini slot, one subframe or one TTI in length. One TTI, one subframe, and the like may each be constituted by of one or more resource blocks.

Note that one or more RBs may be referred to as a physical resource block (PRB), a sub-carrier group (SCG), a resource element group (REG), a PRB pair, an RB pair, and the like.

Furthermore, a resource block may include one or more resource elements (REs). For example, one RE may be a radio resource field of one subcarrier and one symbol.

A bandwidth part (BWP) (which may be referred to as a partial bandwidth or the like) may represent a subset of contiguous common resource blocks (RBs) for a certain numerology in a certain carrier. Here, the common RB may be specified by the index of the RB based on a common reference point of the carrier. The PRB may be defined in a BWP and numbered within the BWP.

The BWP may include a BWP for UL (UL BWP) and a BWP for DL (DL BWP). For the UE, one or more BWPs may be configured within one carrier.

At least one of the configured BWPs may be active, and the UE does not have to expect transmission/reception of a predetermined signal/channel outside the active BWP. Note that "cell", "carrier", and the like in the present disclosure may be replaced with "BWP".

Note that the structures of radio frames, subframes, slots, mini slots, symbols and so on described above are merely examples. For example, configurations such as the number of subframes included in a radio frame, the number of slots per subframe or radio frame, the number of mini slots included in a slot, the number of symbols and RBs included in a slot or a mini slot, the number of subcarriers included in an RB, the number of symbols in a TTI, the symbol length, the length of cyclic prefix (CP), and the like can be variously changed.

Further, the information, parameters, and the like described in the present disclosure may be represented in absolute values or in relative values with respect to given values, or may be represented using other applicable information. For example, a radio resource may be indicated by a predetermined index.

The names used for parameters and the like in the present disclosure are in no respect limiting. Further, any mathematical expression or the like that uses these parameters may differ from those explicitly disclosed in the present disclosure. Since various channels (PUCCH, PDCCH, and the like) and information elements can be identified by any suitable names, various names allocated to these various channels and information elements are not restrictive names in any respect.

The information, signals, and the like described in the present disclosure may be represented using any of a variety of different technologies. For example, data, instructions, commands, information, signals, bits, symbols and chips, all of which may be referenced throughout the herein-contained description, may be represented by voltages, currents, electromagnetic waves, magnetic fields or particles, optical fields or photons, or any combination of these.

Further, information, signals, and the like can be output in at least one of a direction from higher layers to lower layers and a direction from lower layers to higher layers. Information, signals and so on may be input and output via a plurality of network nodes.

The information, signals and so on that are input and/or output may be stored in a specific location (for example, in a memory), or may be managed in a control table. The information, signals, and the like to be input and output can be overwritten, updated, or appended. The output information, signals, and the like may be deleted. The information, signals and so on that are input may be transmitted to other pieces of apparatus.

Notification of information may be performed not only by using the aspects/embodiments described in the present disclosure but also using another method. For example, the notification of information in the present disclosure may be performed by using physical layer signaling (for example, downlink control information (DCI) or uplink control information (UCI)), higher layer signaling (for example, radio resource control (RRC) signaling, broadcast information (master information block (MIB)), system information block (SIB), or the like), or medium access control (MAC) signaling), another signal, or a combination thereof.

Note that the physical layer signaling may be referred to as Layer 1/Layer 2 (L1/L2) control information (L1/L2 control signal), L1 control information (L1 control signal), and the like. Further, the RRC signaling may be referred to as an RRC message, and may be, for example, an RRC connection setup message, an RRC connection reconfiguration message, and the like. Further, notification of the MAC signaling may be performed using, for example, an MAC control element (CE).

In addition, notification of predetermined information (for example, notification of "being X") is not limited to explicit notification, and may be performed implicitly (for example, by not giving a notification of the predetermined information or by giving a notification of another information,).

Decisions may be made in values represented by one bit (0 or 1), may be made in Boolean values that represent true or false, or may be made by comparing numerical values (for example, comparison against a given value).

Software, whether referred to as software, firmware, middleware, microcode or hardware description language, or called by other names, should be interpreted broadly, to mean instructions, instruction sets, code, code segments, program codes, programs, subprograms, software modules, applications, software applications, software packages, routines, subroutines, objects, executable files, execution threads, procedures, functions and so on.

Moreover, software, commands, information, and the like may be transmitted and received via communication media. For example, when software is transmitted from a website, a server, or another remote source by using at least one of a wired technology (coaxial cable, optical fiber cable, twisted pair, digital subscriber line (DSL), or the like) or a wireless technology (infrared rays, microwaves, and the like), at least one of the wired technology or the wireless technology is included within the definition of a transmission medium.

The terms "system" and "network" used in the present disclosure may be used interchangeably. The "network" may mean an apparatus (for example, a base station) included in the network.

In the present disclosure, terms such as "precoding", "precoder", "weight (precoding weight)", "quasi-co-location (QCL)", "transmission configuration indication state (TCI state)", "spatial relation", "spatial domain filter", "transmission power", "phase rotation", "antenna port", "antenna port group", "layer", "number of layers", "rank", "resource", "resource set", "resource group", "beam", "beam width", "beam angle", "antenna", "antenna element", and "panel" may be used interchangeably.

In the present disclosure, terms such as "base station (BS)", "radio base station", "fixed station", "NodeB", "eNodeB (eNB)", "gNodeB (gNB)", "access point", "transmission point (TP)", "reception point (RP)", "transmission/reception point (TRP)", "panel", "cell", "sector", "cell group", "carrier", and "component carrier", may be used interchangeably. The base station may be referred to as a term such as a macro cell, a small cell, a femto cell, or a pico cell.

The base station can accommodate one or more (for example, three) cells. In a case where the base station accommodates a plurality of cells, the entire coverage area of the base station can be partitioned into a plurality of smaller areas, and each smaller area can provide communication services through a base station subsystem (for example, small base station for indoors (remote radio head (RRH))). The term "cell" or "sector" refers to a part or the whole of a coverage area of at least one of the base station or the base station subsystem that performs a communication service in this coverage.

In the present disclosure, the terms such as "mobile station (MS)", "user terminal", "user equipment (UE)", and "terminal" may be used interchangeably.

The mobile station may be referred to as a subscriber station, mobile unit, subscriber station, wireless unit, remote unit, mobile device, wireless device, wireless communication device, remote device, mobile subscriber station, access terminal, mobile terminal, wireless terminal, remote terminal, handset, user agent, mobile client, client, or some other suitable terms.

At least one of the base station or the mobile station may be called as a transmitting apparatus, a receiving apparatus, a radio communication apparatus, and the like. Note that at least one of the base station or the mobile station may be a device mounted on a moving body, a moving body itself, and the like. The moving body may be a transportation (for example, a car, an airplane, or the like), an unmanned moving body (for example, a drone, an automated car, or the like), or a (manned or unmanned) robot. Note that at least one of the base station and the mobile station also includes a device that does not necessarily move during a communication operation. For example, at least one of the base station or the mobile station may be an Internet of Things (IoT) device such as a sensor.

Further, the base station in the present disclosure may be replaced with the user terminal. For example, each aspect/embodiment of the present disclosure may be applied to a configuration in which communication between the base station and the user terminal is replaced with communication among a plurality of user terminals (which may be referred to as, for example, device-to-device (D2D), vehicle-to-everything (V2X), and the like). In this case, the user terminal 20 may have the function of the above-described base station 10. In addition, terms such as "uplink" and "downlink" may be replaced with words corresponding to terminal-to-terminal communication (for example, "side link"). For example, an uplink channel, a downlink channel, and the like may be replaced with a side link channel.

Similarly, a user terminal in the present disclosure may be replaced with a base station. In this case, the base station 10 may have the functions of the user terminal 20 described above.

In the present disclosure, an operation performed by the base station may be performed by an upper node thereof in some cases. In a network including one or more network nodes with base stations, it is clear that various operations performed for communication with a terminal can be performed by a base station, one or more network nodes (examples of which include but are not limited to mobility management entity (MME) and serving-gateway (S-GW)) other than the base station, or a combination thereof.

The aspects/embodiments illustrated in the present disclosure may be used individually or in combinations, which may be switched depending on the mode of implementation. Further, the order of processing procedures, sequences, flowcharts, and the like of the aspects/embodiments described in the present disclosure may be reordered as long as there is no inconsistency. For example, the methods described in the present disclosure have presented various step elements using an exemplary order, and are not limited to the presented specific order.

Each aspect/embodiment described in the present disclosure may be applied to a system using long term evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG) (xG (x is, for example, an integer or decimal)), future radio access (FRA), new radio access technology (RAT), new radio (NR), new radio access (NX), future generation radio access (FX), global system for mobile communications (GSM (registered trademark)), CDMA2000, ultra mobile broadband (UMB), IEEE 802.11 (Wi-Fi (registered trademark)), IEEE 802.16 (WiMAX (registered trademark)), IEEE 802.20, Ultra-Wide Band (UWB), Bluetooth (registered trademark), or another appropriate radio communication method, a next generation system expanded based on these, and the like. Further, a plurality of systems may be combined and applied (for example, a combination of LTE or LTE-A and 5G, and the like).

The phrase "based on" as used in the present disclosure does not mean "based only on", unless otherwise specified. In other words, the phrase "based on" means both "based only on" and "based at least on".

All references to the elements using designations such as "first" and "second" as used in the present disclosure do not generally limit the amount or sequence of these elements. These designations can be used in the present disclosure, as a convenient way of distinguishing between two or more elements. In this way, reference to the first and second elements does not imply that only two elements may be employed, or that the first element must precede the second element in some way.

The term "determining" as used in the present disclosure may include a wide variety of operations. For example, "determining" may be regarded as "determining" judging, calculating, computing, processing, deriving, investigating, looking up (or searching or inquiring) (for example, looking up in a table, database, or another data structure), ascertaining, and the like.

Furthermore, to "judge" and "determine" as used herein may be interpreted to mean making judgements and determinations related to receiving (for example, receiving information), transmitting (for example, transmitting information), inputting, outputting, accessing (for example, accessing data in a memory) and so on.

In addition, to "judge" and "determine" as used herein may be interpreted to mean making judgements and determinations related to resolving, selecting, choosing, establishing, comparing and so on. In other words, to "judge" and "determine" as used herein may be interpreted to mean making judgements and determinations related to some action.

In addition, "determining" may be replaced with "assuming", "expecting", "considering", or the like.

As used in the present disclosure, the terms "connected" and "coupled", or any variation of these terms mean all direct or indirect connections or couplings between two or more elements, and may include the presence of one or more intermediate elements between two elements that are "connected" or "coupled" to each other. The coupling or connection between the elements may be physical, logical, or a combination of these. For example, "connection" may be replaced with "access".

In the present disclosure, when two elements are connected together, it is conceivable that the two elements are "connected" or "coupled" to each other by using one or more electrical wires, cables, printed electrical connections, and the like, and, as some non-limiting and non-inclusive examples, by using electromagnetic energy having wavelengths in the radio frequency domain, microwave region, or optical (both visible and invisible) region, or the like.

In the present disclosure, a term "A and B are different" may mean "A and B are different from each other". Note that the phrase may mean that "A and B are different from C". The terms such as "separated", "coupled", and the like may be interpreted as "different".

When "include", "including", and variations of these are used in the present disclosure, these terms are intended to be inclusive similarly to the term "comprising". Furthermore, the term "or" as used in the present disclosure is intended to be not an exclusive-OR.

In the present disclosure, for example, in a case where translations add articles such as a, an, and the in English, the present disclosure may include that the noun that follows these articles is in the plural.

Although the invention according to the present disclosure has been described in detail above, it is obvious to a person skilled in the art that the invention according to the present disclosure is not limited to the embodiments described in the present disclosure. The invention according to the present disclosure can be embodied with various corrections and in various modified aspects, without departing from the spirit and scope of the invention defined based on the description of claims. Thus, the description of the present disclosure is for the purpose of explaining examples and does not bring any limiting meaning to the invention according to the present disclosure.

This application is based on Japanese Patent Application No. 2021-132991 filed on August 17, 2021. The contents of this are all incorporated herein.

## Claims

1. A terminal, comprising:
a receiving section that receives a response to a beam failure report in a case where any of a single transmission/reception point (TRP), single downlink control information (DCI)-based multi-TRPs, or multi-DCI-based multi-TRPs are applied; and
a control section that performs control assuming a control resource set (CORESET) corresponding to two transmission configuration indication (TCI) states.

2. The terminal according to claim 1, wherein
in a case where the CORESET corresponding to the two TCI states is applied, the control section updates the two TCI states to an index of a new candidate beam.

3. The terminal according to claim 1, wherein
in a case where the CORESET corresponding to the two TCI states is applied, the control section updates one of the two TCI states to an index of a new candidate beam.

4. The terminal according to any one of claims 1 to 3, wherein in a case where a physical uplink control channel (PUCCH) corresponding to two spatial relations is applied, the control section updates the two spatial relations and a transmission power parameter.

5. A radio communication method of a terminal, the method comprising:
a step of receiving a response to a beam failure report in a case where any of a single transmission/reception point (TRP), single downlink control information (DCI)-based multi-TRPs, or multi-DCI-based multi-TRPs are applied; and
a step of performing control assuming a control resource set (CORESET) corresponding to two transmission configuration indication (TCI) states.

6. A base station, comprising:
a transmitting section that transmits a response to a beam failure report in a case where any of a single transmission/reception point (TRP), single downlink control information (DCI)-based multi-TRPs, or multi-DCI-based multi-TRPs are applied; and
a control section that performs control assuming a control resource set (CORESET) corresponding to two transmission configuration indication (TCI) states.
